# EUROPEAN PATENT SPECIFICATION

(11) **EP 2 277 382 B1**
(45) Date of publication and mention of the grant of the patent: **26.03.2014**
(21) Application number: 08752585.3
(22) Date of filing: 12.05.2008
(51) Int. Cl.: A22C 17/00, A22C 21/00

(54) **LOADING METHOD AND LOADING DEVICE OF MEAT WITH BONE**
LADEVERFAHREN UND LADEVORRICHTUNG FÜR NICHT ENTBEINTES FLEISCH
PROCÉDÉ ET DISPOSITIF DE CHARGEMENT DE VIANDE AVEC OS

(43) Date of publication of application: 26.01.2011
(73) Proprietor: Mayekawa Mfg. Co., Ltd., Koto-ku Tokyo 135-8482 (JP)
(72) Inventor: UMINO, Tatsuya, Tokyo 135-8482 (JP); KOZU, Shozo, Tokyo 135-8482 (JP); USUI, Hiroyuki, Tokyo 135-8482 (JP); GOTO, Osamu, Tokyo 135-8482 (JP)
(74) Representative: Regimbeau
(86) International application number: PCT/JP2008/058702
(87) International publication number: WO 2009/139031

(56) References cited:
- JP-A- 4 275 891
- JP-A- 11 049 474
- JP-A- 11 049 474
- JP-A- 11 278 650
- JP-A- 2001 149 001
- JP-A- 2002 103 254
- JP-A- 2005 011 580
- US-A1- 2007 082 596

## Description

### [BACKGROUND OF THE INVENTION]

### [TECHNICAL FIELD]

The present invention relates to an automated method and a device of loading meat with bones on a conveyance line in a deboning process of deboning meat with bone along the conveyance line and a loading operation program thereof.

### [DESCRIPTION OF THE RELATED ART]

In dissection and de-boning operation of a slaughtered domestic animal that is a fairly heavy object, operators have been forced to experience heavy physical labor. Therefore, labor saving by automatization and improvement in yield rate of meat has been studied.

In Patent Literature 1 is disclosed a semi-automated de-boning machine for carrying out de-boning of a pig thigh and a method of de-boning by use of the machine. In the machine pig thighs experience a pretreatment process, meat scrape-off process for scraping off meat adhering to the lower femurbone, and meat scrape-off process for scraping off meat adhering to the femurbone while the pig thighs are transferred in a state they are suspended with their ankles clamped with clampers attached to a transfer chain.

Document US 2007/082596 discloses a method and a device of loading and deboning meat with a bulged portion widening toward a main body thereof and an exposed tip bone.

All the processes are carried out in a state the pig thighs are hung in midair so that influence of their own weight in the processing is suppressed to a minimum, operations on a chopping board is eliminated so that adhesion of bacteria via the chopping board is prevented and sanitary deboning operation is carried out, and manual processing is limited to the pretreatment process at the first step and the succeeding de-boning processes are automated. Thus, streamlining and reduction in labor power in de-boning operation were achieved.

In the pretreatment process, the hipbone 4 including the hipbone and tailbone are removed and incisions are made to the meat along the lower femurbone (including tibia and fibula) and femurbone by an operator while the pig thigh is transferred hanging from the clamper. In these succeeding automated processes, incisions are made with a cutter around the lower thigh and thigh of the pig thigh hanging from the clamper while scraping off the meat adhering to bones with a meat scraper. By this, biomedical tissue such as muscle, tendon, and ligament adhering to the bones are cut, and meat is separated from the bones stepwise. These incisions are made with a cutter to cut biomedical tissue surrounding the bones at determined positions in longitudinal direction by rotating the pig thigh.

In Patent Literature 2 is disclosed a method and apparatus for automating a process of making incision into the thigh meat of poultry performed as a preprocessing in de-boning process of a poultry thigh. A thigh holding and an incision making devices are provided in a incision making station provided on a transfer route of a buffer conveyor, and the incision is made by the incision making device in a state the poultry thigh is held by the thigh holding device in a prescribed attitude.

Patent Literature 1:JP2000-106818A
Patent Literature 2:JP2001-149001A

### [SUMMARY OF THE INVENTION]

### [PROBLEMS TO BE SOLVED]

With the deboning devices disclosed in Patent Literatures 1 and 2, the meat is manually hung to the clamper or hanger attached to the transfer chain traveling on the traveling path. This hanging process is done by an operator and not yet automated. Therefore, the operator has to do heavy work of lifting heavy meat with bone.

For the purpose of automating the loading step and eliminating the hard work of manually lifting the heavy meat, it is possible to use a multi-axis articulated arm whose motion is controlled according to a motion program and being equipped with a gripper at a tip thereof. However, in order to hold the meat with bone with the multi-axis articulated arm, a thinnest part of the meat needs to be always positioned in a certain direction for an easy grip at a predetermined position, which still needs to be manually done. Thus, there is still a step that requires a manual labor.

In a view of the problem of the related art, a object of the present invention is to completely automate the process of loading the meat with bone to a clamper or hanger attached to a deboning line, thereby saving labor.

### [MEANS TO SOLVE THE PROBLEMS]

In order to solve the problem above, the present invention proposes a method according to claim 1.

According to the method of the present invention, the meat is positioned such that the tip projection of the meat is aligned along a traveling direction of the conveyor, and then moved the meat toward the downward side of the conveyor. The V-shaped guide is provided at the upstream side of the conveyor and the meat with bone is intercepted by the V-shaped guide and the movement of the meat is temporarily stopped. On the other hand, as the conveyor is still moving, the main body of meat is gradually pressed against the guide plates of the V-shaped guide. The movement of the conveyor forces the tip projection of the meat to slide on the conveyor and stick out through the gap. In this state, the main body of the meat remains intercepted by the V-shaped guide and the movement thereof is stopped. In this manner, the meat with bone is positioned at the V-shaped guide.

The positioned tip projection of the meat is gripped with the multi-axis articulated arm which is operated along a predetermined motion orbit, and transferred to the loading unit of the carrier device.

In the method of the present invention, as the meat with bone is positioned by stopping the movement thereof temporarily, the meat can be easily gripped at the tip projection by the multi-axis articulated arm. Moreover, the moving force of the conveyor forces out the tip projection through the gap of the V-shaped guide, and thus the tip projection can be forced out through the gap unfailingly. Therefore, the tip projection is easily gripped with the multi-axis articulated arm without fail.

During the deboning process, work for loading the meat on a clamping device or a hanger installed on a transfer chain or a carrier line can be completely automated and personal cut is realized.

It is preferable that in his method, the motion orbit and operation timing of the gripping device are program-controlled in synchronization with a motion of the deboning process. Or it is also preferable to teach the multi-axis articulated arm the motion orbit of gripping the tip projection beforehand so as to move the arm along the taught motion orbit.

The step of gripping the meat with bone of the present invention preferably includes substeps of;
provisionally holding the meat with the gripping device at a point of the tip projection nearer to a main body of the meat than a clamp point to be gripped with the gripping device; and
then sliding the meat down by weight of the meat when the multi-axis articulated arm lifts the meat so that the tip projection of the meat is gripped with the gripping device at the clamp point.
With this, the tip projection of the meat is securely gripped with the gripping device at the clamp point.

In the method of the present invention, a top surface of the conveyor is used as a table for pre-treating the meat with bone so that the pretreated meat can be automatically transferred to the carrier device by moving the conveyor with the pretreated meat loaded thereon.

It is also preferable that the transferring step includes substeps of:
hanging the meat to a clamp table having such clearance that a thinnest part of the meat fits in, the clamp table being located on a loading part of a carrier device; and
transferring the meat from the clamp table to a clamper in the carrier device by a pusher provided on the clamp table, the pusher being controlled so that a movement of the pusher is in synchronization with that of the clamper.
With this, the meat chucked by the chuck device of the multi-axis articulated arm can be transferred onto the carrier device with an easy construction.

The present invention also provides a device according to claim 6.

With this construction, the meat can be securely positioned in such state that the tip projection of the meat is sticking through the gap between the guide plates of the V-shaped guide. Thus positioning of the meat can be completely automated, and the meat can be securely chucked at the tip projection by the gripping device of the multi-axis articulated arm. In this manner, the step of loading the meat to the carrier device can be automated.

It is preferable that the gripping device includes a pair of gripping pieces being capable of moving closer or away from each other and having depressions formed on inner surfaces of the gripping pieces, and
wherein a thinnest part of the meat slides into the depressions of the gripping pieces when the gripping device lifts the meat by the gripping pieces.

With this, the tip projection of the meat can be gripped with the gripping device of the multi-axis articulated arm without fail.

As a program for implementing the method of loading the meat with bone of the present invention, it is referable that the multi-axis articulated arm is caused to grip and lift the meat at the tip projection sticking out through the gap of the V-shaped guide, and then transfer the meat to the loading part of the carrier device.

It is also preferable that the gripping device is constituted of a pair of gripping pieces being capable of moving closer or away from each other and having depressions formed on inner surfaces of the gripping pieces, and
wherein the gripping device is caused to move the pair of the gripping pieces thereof closer so as to grip the tip projection of the meat when a thinnest part of the meat slides into the depressions with its own weight when the multi-axis articulated arm lifts the meat with the gripping device.

With this movement, the meat can be securely gripped at the clamp point in the depressions of the gripping pieces.

### [EFFECT OF THE INVENTION]

According to the method of loading meat with bone on a carrier device which carries the meat with bone during a deboning process for deboning the meat with bone, the method comprises the steps of:
moving the meat toward a downstream side of a conveyor in a state where a tip projection of the meat is aligned along a traveling direction of the conveyor, the conveyor being provided with a V-shaped guide on the downstream side thereof, the V-shaped guide being constituted of a pair of guide plates arranged so as to form a gap therebetween such that the tip projection can pass through;
positioning the tip projection of the meat by temporarily stopping a movement of the meat on the conveyor by means of the V-shaped guide in such a manner that the tip projection of the meat sticks out through the gap between the pair of guide plates by a moving force of the conveyor;
gripping the positioned tip projection of the meat with a multi-axis articulated arm which has a gripping device being operated along a predetermined motion orbit; and
transferring the gripped meat to a loading part of the carrier device by the multi-axis articulated arm.

Therefore, the meat can be gripped by the multi-axis articulated arm and loaded onto the loading unit of the carrier device and thus work for loading the meat with bone on the loading unit can be completely automated with a machine and personal cut is realized.

The device of the present invention for loading meat with bone on a carrier device which carries the meat with bone during a deboning process for deboning the meat with bone by means of stations arranged along the carrier device, comprises
at least one conveyor arranged near a loading unit of a carrier device;
a V-shaped guide which is provided above the conveyor and constituted of a pair of guide plates arranged so as to form a gap therebetween such that the tip projection of the meat can pass through, the V-shaped guide temporarily stopping a movement of the meat on the conveyor to position the tip projection of the meat in such a manner that the tip projection of the meat sticks out through the gap between the pair of guide plates; and
a multi-axis articulated arm which has a gripping device gripping the tip projection of the meat positioned by the V-shaped guide plate, the multi-axis articulated arm being operated along a predetermined motion orbit so that the gripped meat is transferred to the loading part of the carrier device.

Therefore, the tip projection of the meat loaded on the conveyor can be securely gripped by the multi-axis articulated arm and the meat can be loaded onto the carrier device. And the loading step can be automated by such machine and personal cut is realized.

When implementing the method of loading the meat with bone of the present invention, the multi-axis articulated arm is caused to grip and lift the meat at the tip projection sticking out through the gap of the V-shaped guide, and then transfer the meat to the loading part of the carrier device so that the tip projection of the meat loaded on the conveyor is securely gripped the multi-axis articulated arm and being loaded onto the carrier device. Thus, the loading step can be automated with such machine and personal cut is realized.

### [BRIEF DESCRIPTION OF THE DRAWINGS]

FIG.1 is a plan view showing overall construction of the deboning apparatus of an embodiment of the present invention.
FIG.2 is a representation of all processing steps performed by the deboning device.
FIG.3a and FIG.3b are a plan view of a gripped part of a multi-spindle multi-joint arm, showing when the grip is opened and closed, respectively.
FIG.4 is a block diagram of the control system of the deboning apparatus.
FIG.5 is a plan view showing the work shifting device of the deboning apparatus.
FIG. 6 is a representation for explaining catch-and-hang step of the pig thigh in the deboning process.
FIGS.7a to 7c are drawings showing procedure of catch-and-hang step of the pig thigh.
FIG. 8a is an elevation view for explaining the discrimination device for distinguishing the right leg of the pig from the left one, and FIG.8b is a section along a line A-A in FIG.8a.
FIG.9 is a drawing for explaining the driving device for driving the discrimination device shown in FIG.8a and 8b.
FIG.10a is an elevation view of the work length detection device showing a state before the device is engaged, and FIG.10b shows when the device is engaged.
FIG.11 is a plan view of the work length detection device.
FIG.12 is a side view of the multi-spindle multi-joint arm for making incision.
FIG.13 is plan view of an elastic supporting device of a cutter blade.
FIG.14 is a front view of the elastic supporting device of FIG.13.
FIG.15 is a drawing for explaining movement of the cutter blade when incision is made.
FIG.16a is a front view of a right pig thigh, FIG.16b is a section along a line B-B in FIG.16a, and FIG,16c is a section along a line C-C in FIG.16a.
FIG.17 is a plan view of the back surface supporter.
FIG.18a is a front view of the front surface and back surface supporting device when the device is not engaged, and FIG.18b is when the device is engaged.
FIGS.19a and 19b are drawings showing incision making positions in the first incision making process, FIG.19a being front view of the pig leg part and FIG. 19b being a section along a line D-D in FIG.19a.
FIGS.20a-c are drawings showing incision making positions in the second incision making process, FIG.20a being front view of the pig leg part, FIG.20b being a view in the direction of an arrow E in FIG.20a, and FIG.20c being view in the direction of an arrow F in FIG.20b.
FIGS.21a and 21b are drawings showing incision making positions in the third incision making process, FIG.21a being front view of the pig leg part, and FIG.21 being a view in the direction of an arrow G in FIG.21a.
FIG.22a is a sectional view along a line H-H in FIG.21a, and FIG.22b is a view as in FIG.22a of a comparative example to explain the necessity that the first incision e must be performed before performing the third incision g.
FIG.23a is a front view of the last incision-making device, and FIG.23b is an enlarged view of a part I of the pig thigh in FIG.23a.
FIG.24 is a drawing for explaining the meat scrape-off process for scraping off meat adhering to the lower femurbone.
FIG.25 is a plan view of the first lower-thigh-meat scrape-off device used in the first step of the lower-thigh-meat scrape-off process.
FIGS.26a and 26b are a front view of the first lower-thigh-meat scrape-off device of FIG.25, respectively.
FIG.27 is a drawing for explaining positional relation between the interosseous scraper of the first lower-thigh- meat scrape-off device and the work 1.
FIG.28 is a plan view of the second lower-thigh-meat scrape-off device used in the second step of the lower-thigh-meat scrape-off process.
FIG.29 is a front view of the second lower-thigh-meat scrape-off device of FIG.28.
FIG.30 is a drawing for explaining meat scrape-off process performed by the second lower-thigh-meat scrape-off device of FIG.28.
FIG.31 is a side view of the thigh-meat scrape-off device.
FIG.32 is a view in the direction of an arrow J in FIG.31.
FIG.33 is a view in the direction of an arrow K in FIG.31.
FIG. 34 is a plan view of the gripping device of the thigh-meat scrape-off device with the meat_separator depicted with a dashed double-dotted line on the gripping device.
FIG.35 is a partial enlarged view of FIG.33.
FIGS.36a∼d are drawings for explaining deboning process performed by the thigh-meat scrape-off device.

### [DETAILED DESCRIPTION OF THE INVENTION]

Preferred embodiment of the present invention will now be detailed with reference to the accompanied drawings. It is intended, however, that unless particularly specified, dimensions, materials, relative positions and so forth of the constituent parts in the embodiment shall be interpreted as illustrative only not as limitative of the scope of the present invention.

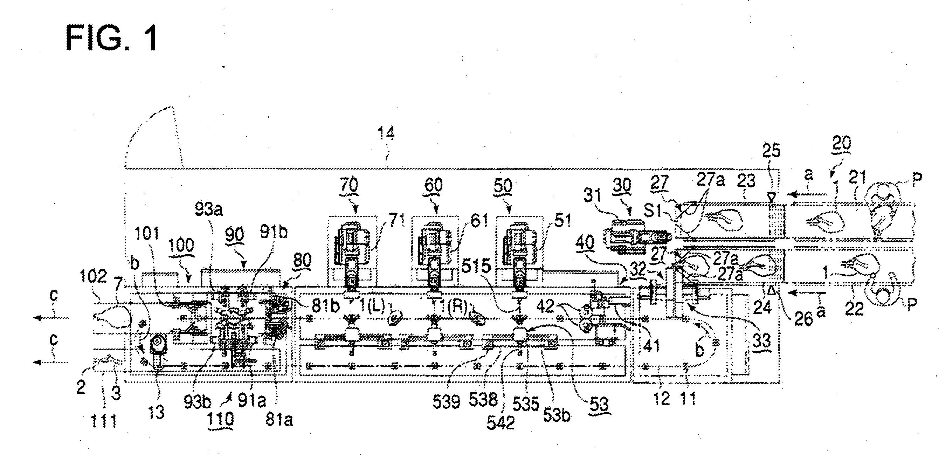

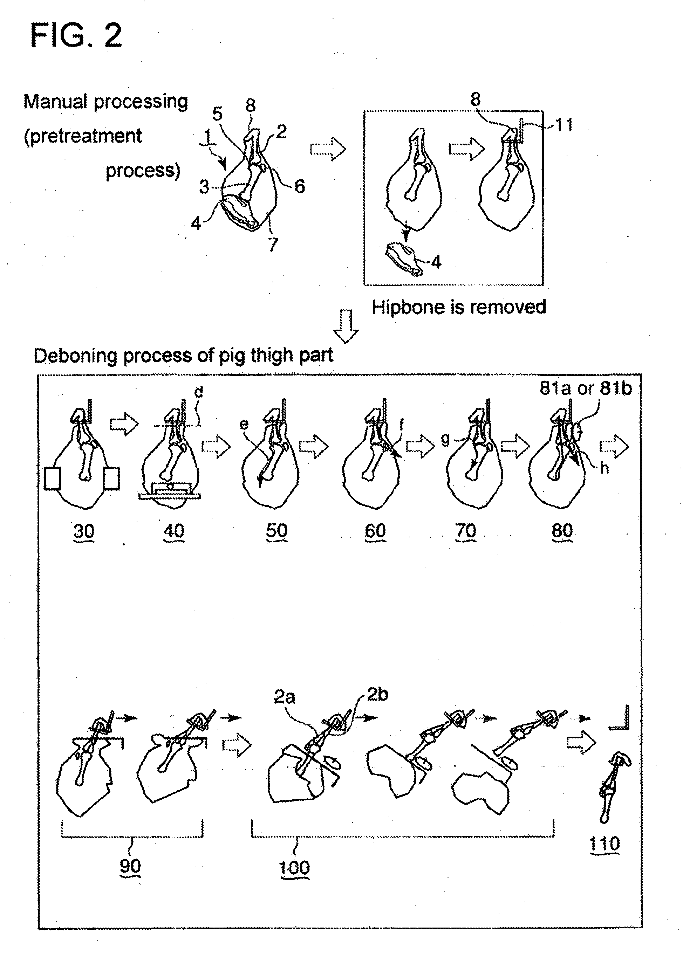

An embodiment of the invention applied to pig femurbone removing apparatus will be explained with reference to FIGS.1∼36. FIG.1 is a plan view showing overall construction of the deboning apparatus of an embodiment of the present invention, and FIG.2 is a representation of all processing steps performed by the deboning apparatus.

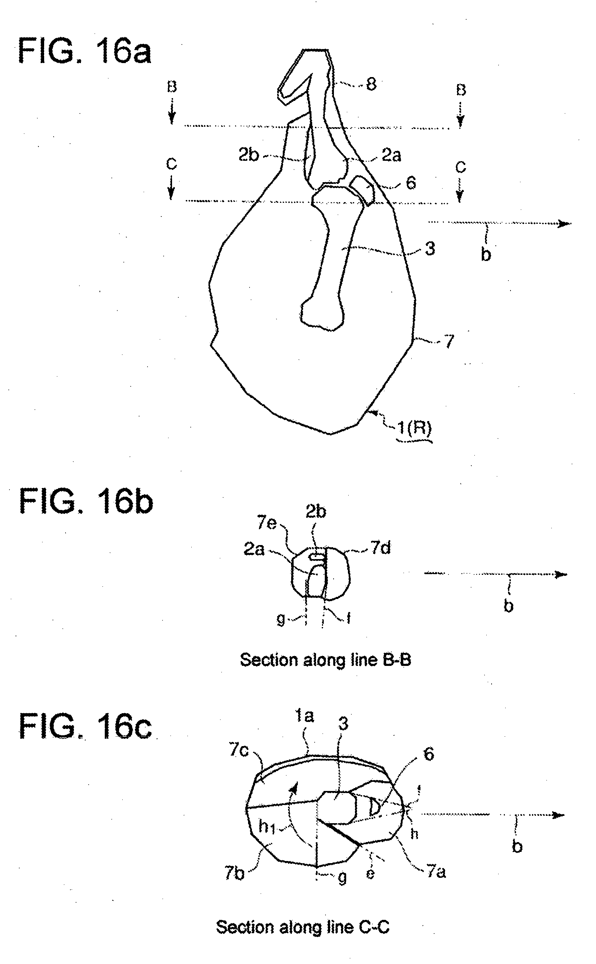

Referring to FIG.2, a pig leg part 1(hereafter referred to as a work 1) includes a lower femurbone 2 (including tibia and fibula), a femurbone 3, a hipbone 4, a knee cap 6 positioned at a front part of the knee joint part 5 of the femurbone 3, and meat 7 surrounding these bones. As shown in FIG. 16b and 16c, a meat part surrounding the lower femurbone 2 consists of a calf meat part 7d (chimaki in Japanese) and shank 7e, and a meat part surrounding the femurbone consists of a knuckle meat part 7a (shintama in Japanese), inner thigh meat 7b, and outer thigh meat 7c of which the outer surface is covered with a fat layer 1a.

First, the hipbone 4 is removed by an operator manually in a pretreatment station 20. Then, an ankle part 8 of the work 1 deprived of the hipbone 4 (hereafter the work 1 deprived of the hipbone 4 is also referred to as work 1) is mounted on a transfer line of the deboning apparatus at a work mounting station 30 using a multi-spindle multi-joint arm 31. The work 1 (leg part) is clamped at its ankle to a clamper 11 fixed to a transfer chain 12 of the transfer line at random, regardless whether it is a right or left leg part. In this state, automated processes are carried out at stations from an initial incision making station 40 to a bone discharging station 110.

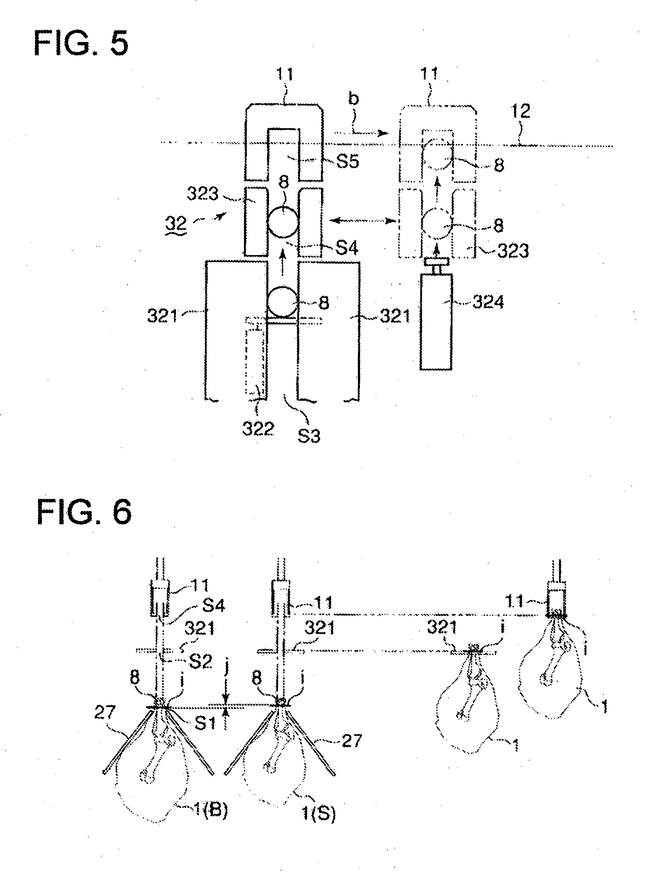

In FIG.1, the transfer chain 12 is installed horizontally and driven by a driving device 13 for the clamper to be circulated at a constant speed. As shown in FIG.5, the clamper 11 has a recession for receiving the ankle 8 of the work 1 and is fixed to the chain at an equal spacing. The clamper 11 is transferred along the circulation route formed by the transfer chain 12 horizontally at a constant speed while suspending the work 1. The work 1 is suspended in such an attitude that the fat layer 1a thereof is directed to the inner side of the circulation route formed by the transfer chain 12 during it is transferred from the initial re-incision making station 40 to a last incision making station 80.

Discrimination of right or left leg is done in a mounting station 30 as mentioned later. A device for rotating the clamper 11 and a fulcrum 11a (seeFIG.26 and 36) for allowing the clamper 11 to tilt toward the transfer direction b are provided. The clamper rotating device is used in a first incision making station 50 to a third incision making station 70, and the tilting device is used in a lower-thigh-meat scrape-off station 90 for scraping off meat from the lower femurbone and in a thigh-meat scrape-off station 100 for scraping off meat from the femurbone.

In the pretreatment station 20 are arranged belt conveyors 21 and 22 in two parallel rows. The belt conveyors 21 and 22 move in the direction of arrow a at a constant speed. Operators P remove the hipbone 4 from each of the works 1 as pretreatment in this station 20. Belt conveyors 23 and 24 are arranged respectively downstream of the belt conveyors 21 and 22 in succession. Sensors 25 and 26 for detecting passing of the works 1 are provided respectively at each entrance of the belt conveyors 23 and 24.

The deboning line downstream the line 21, 22 is arranged in a region surrounded by a threshold 14. The operators P turn the works 1 deprived of their hipbones 4 so that their ankle parts 8 face toward left in the direction of the arrow a with their fat layers 1a contacting the surfaces of each of the conveyors 21 and 22 respectively. On this occasion, it is not required that the ankle part 8 is directed exactly in the direction of the longitudinal center line of the belt.

The works 1 laid on the belt conveyor 21 and 22 are received on the belt conveyor 23 and 24 to be transferred thereon. At the transfer end of each of the belt conveyors 23 and 24is provided a V-letter shaped guide 27. The V-shaped guide 27 consists of a pair of rectangular plates 27a and 27a inclining from both side ends of the belt conveyor 23 (24) toward the center thereof in the transfer direction thereof. The guide plates 27a are disposed such that their rectangular surfaces are vertical and the lower end of the vertical plates does not contact the surface of the belt.

Between the guide plates 27a arranged in V-shape exists a clearance s1 through which the ankle part 8 can pass. When the work 1 deprived of the hipbone 4 reaches the V-shaped guide 27, the work 1 is pushed against the inclined surfaces of the V-shaped guide 27 due to the traveling of the belt conveyor 23 (24) in the direction of the arrow a. The ankle part 8 enters the clearance s1 by the pushing force and protrudes from the clearance s1. This state is shown in FIG.6.

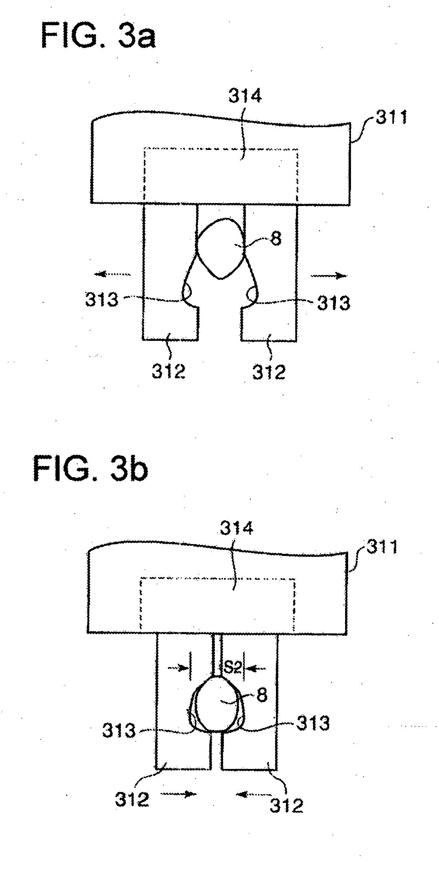

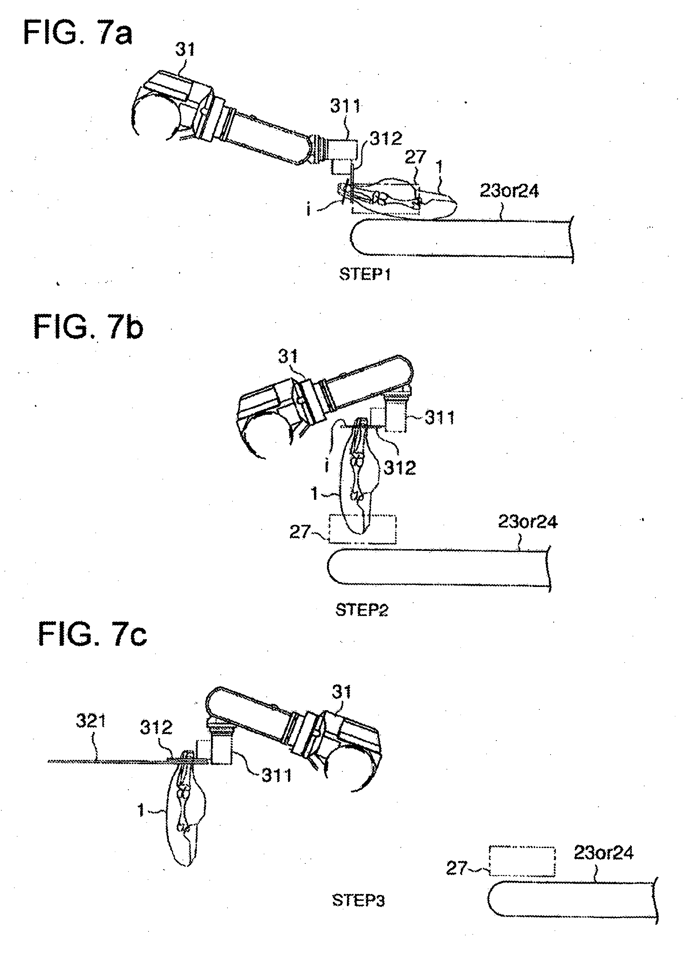

The mounting station 30 is provided downstream of the belt conveyor23(24), and a 6-vertical-spindle multi-joint arm 31 for mounting the work 1 on the deboning line is provided in the station. As shown in FIG.3, a pneumatic gripping device 311 is attached to an end of the work mounting arm 31 (see FIG.7a and 7b). The pneumatic gripping device 311 has a pair of gripping pieces 312, 312 movable in directions to access to or depart from each other and a driving device 314 for driving the gripping pieces 312, 312 to access to or depart from each other.

A depression 313 is formed to each of the gripping pieces 312, 312 on a surface thereof facing each other in order to clamp the ankle part of the work 1. The ankle part 8 protruded from the clearance s1 of the V-shaped guide 27 is gripped by the gripping pieces 312, 312, then they are lifted and carried to a work shift over device 32 which is explained later. The work 1 is shifted to the clamper 11 by means of the work shift over device 32 to be suspended by the clamper 11.

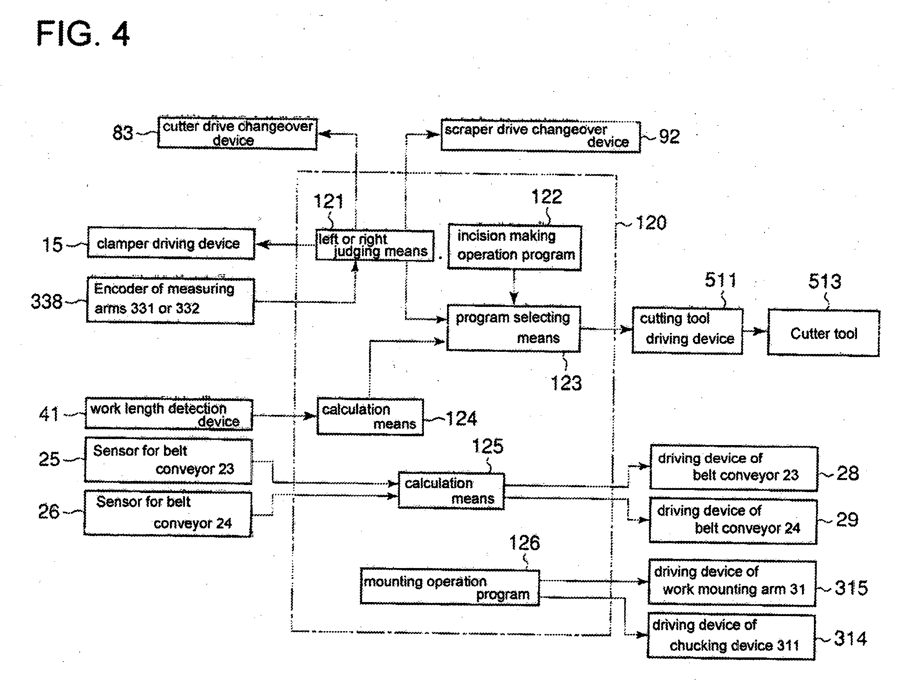

As shown in FIG.4, a controller 120 is provided in the deboning apparatus in order to control total operation of the apparatus. The controller 120 performs controlling of transfer speed of the transfer chain 12, controlling of operation of each station, and controlling of other devices in the deboning line. In the controller 120 is memorized a mounting operation program 126 for controlling trajectories of movement and timing of operation of the work mounting arm 31 and movement of the gripping pieces 312, 312. Operation signals are sent to the driving device 315 of the work mounting arm 31 and the driving device 314 of the pneumatic gripping device 311 so that the work mounting arm 31 and gripping pieces 312, 312 are operated according to the control programs 126.

The controller 120 is provided with a calculation means 125 which calculates an optimal transfer speed of the belt conveyor 23(24) based on the timing detected by the work passing timing detecting sensor 25(26) and controls the driving device 28(29) of the belt conveyor 23(24) so that the transfer speed of the belt conveyor 23(24) matches the timing of gripping the work 1 by the work mounting arm 31.

That is, the transfer speed of the belt conveyor 23(24) is controlled so that the ankle part 8 of the work 1 is present in the clearance s1 of the V-shaped guides 27 of either of the belt conveyor 23 or 24.

Next, composition of the work shift over device 32 will be explained referring to FIG. 5. The work 1 gripped with the gripping pieces 312, 312 of the work mounting arm 31 is suspended by a clamping board 321 as shown in FIG.5. The clamping board 321consists of a pair of horizontally disposed plates, and between the plates is formed a clearance s3 into which the most narrow part of the ankle part 8 of the work 1 can be inserted for the work 1 to be suspended.

The work 1 suspending from the claming board is pushed toward a transit clamping board 323, which consists of a pair of plates arranged horizontally between the clamping board 321 and the chain 12 and a clearance s4 of which the width is the same as that of the clearance s3. The transit clamping board 323 is transferred in the direction the same as the transfer direction b of the clamper 11 and at the same transfer speed as that of the clamper 11 in synchronism with the clamper 11 by a driving device not shown in the drawing.

The work 1 hanging from the transit clamping board 323 is pushed out by a pneumatic cylinder 324 toward the the clamper 11 while the transit clamping board 323 is transferred in synchronism with the clamper 11. In this way, the ankle part 8 of the work 1 is inserted into a clearance s5 of the clamper 11 to be suspended therefrom.

Distance s2 between the bottoms of the depressions 313, 313 of the gripping pieces 312, 312 when they are closed as shown in FIG.3b is the same as clearance s3 in the clamping board 321, clearance s4 in the transit clamping board 323, and clearance s5 in the clamper 11.The transit clamper board 323 is returned to its initial position adjacent the clamping board 321 by means of a drive device not shown in the drawing after the work 1 is shifted over to the clamper 11.

Next, proceeding of mounting the work 1 on the belt conveyor 23 (24) to the clamping board 321 by means of the work mounting arm 31 will be explained referring to FIG. 6 and FIG. 7. FIG.6 shows a situation of positioning the work 1 on the belt conveyor 23 (24), a state the work 1 is suspended by the clamping board 321, and a state the same is suspended by the clamper 11. FIGS.7a to 7c show a proceeding of mounting the work 1 on the belt conveyor 23(24) to the clamping board 321.

The work 1 is positioned on the belt conveyor 23(24) so that the ankle part 8 thereof protrudes from the v-shaped guide 27 through the clearance s1 thereof and the protruded ankle part is gripped by the gripping pieces 312, 312 of the work mounting arm 31 at step 1 as shown in FIG.7a. Then the work 1 gripped by the gripping pieces 312, 312 is lifted at step 2 as shown in FIG.7b. Then, the work 1 lifted up by means of the work mounting arm 31 is pushed into the clearance s3 between the clamping boards 321 to allow the work 1 to be suspended from the clamping boards 321 at step 3 as shown in FIG.7c. After the work 1 is suspended from the clamping boards 321, the gripping pieces are departed to release clamping of the ankle part of the work 1, then the work mounting arm 31 is retreated.

As can be seen in FIG.6, the ankle part 8 of the lower femurbone 2 is shaped such that the thickness of the bone increases from the thinnest part toward the end of the ankle part 8 forming a tapered part. The work shift over device 32 utilizes this shape of the ankle part and allows the work 1 to be suspended from the work clamping board 321 or clamper 11 by inserting the thinnest part of the ankle part 8 into the clearance s3 in the clamping board 321 of the shift over device 32 or into the clearance s5 in the clamper 11.

When the work 1 is suspended from the gripping pieces 312, 312, clamping board 321, transit clamping board 323, or clamper 11, the work 1 is clamped at a position i thereof where thickness of the tapered part of the ankle part 8 coincides with the clearances s2∼s5. As the clearances s2∼s5 are the same in width, the position i where the ankle part 8 of the work 1 is engaged with the clamping devices mentioned above is the same for each of the clamping devices. Therefore, by allowing the trajectory of movement of the gripping pieces 312, 312 to come near to the clamping board 321 as shown in FIG.7c, shifting over of the work 1 can be performed smoothly.

On the other hand, when positioning of the work 1 is performed by the V-shaped guide 27 disposed at the transfer end of the belt conveyor 23(24), protruded length of the ankle part 8 from the clearance s1 of the V-shaped guide 27 varies depending on individual work 1. As shown in FIG. 6, protrusion of the ankle part from the clearance s1 of the V-shaped guide 27 is larger when a work 1(B) larger in size is positioned by the V-shaped guide 27 than when a work 1(S) smaller in size is positioned by the V-shaped guide 27, and clamped position i of the ankle part 8 of the work 1 varies by a variation of j depending on the size of individual work 1.

Force of pushing the work 1 to allow the ankle part 8 to protrude from the tapered end of the V-shaped guide 27 through the clearance s1 is generated by the transferal movement of the belt conveyor 23(24), that is, by friction between the work 1 which is stopped on the belt barred by the V-shaped guide 27 and the surface of the transferring belt. The ankle part 8 can be protruded by the force from the tapered end of the V-shaped guide 27 until a part nearer to the knee joint end side of the lower femurbone 2 is obstructed to pass through the clearance s1 because of its increased thickness. Therefore, the grip pieces can be brought to a position (grip position) that is nearer to the knee joint end side than the variation range j of the clamp position i is.

The grip pieces 312, 312 are brought to a position that is nearer to the knee joint end side than the variation range j of the clamp position i is in a state the grip pieces 312, 312 are opened, that is, distance between them are widened as shown in FIG. 3a. Then the distance between the grip pieces 312, 312 is narrowed to take hold of the ankle 8. When the work 1 is lifted, weight to the work 1 is exerted on the grip pieces 312, 312, and the work 1 moves down slides along the tapered part of each of the depressions of the grip pieces 312, 312 until it is stopped at the clamp position i because thickness of the ankle part 8 increases toward the end thereof.

When the gripped position comes near to the clamp position i, the distance between the grip pieces 312, 312 is narrowed by a control signal from the controller 120 based on the mounting operation program 126. That is, when the work 1 is clutched and raised up, and the gripped position comes near the clamp position i due to its weight, the distance between the grip pieces 312, 312 are narrowed. When the work 1 is lifted up by the work mounting arm 31 and the total weight of the work 1 is exerted on the grip pieces 312, 312, the ankle part 8 is received in the space formed by the depression 313, 313 of the grip pieces 312, 312 and the distance between the grip pieces is narrowed most. The grip position of the work 1 reaches the clamp position thereof at this time. In this way, the work 1 can be held with certainty by its ankle part 8 by the grip pieces 312, 312 of the work mounting arm and can be mounted to the clamping board 321 without fail.

The work 1 is suspended by program-controlling movements of the 6-spindle multi-joint mounting arm 31 and the grip pieces 312, 312 in the mounting station 30, and the pre-treated work 1 is taken hold of by the grip pieces 312, 312 and allowed to be suspended from the clamper 11, so mounting operation of the work 1 to the clamper 11 can be automated. As the pre-treated work 1 transferred on the belt conveyor 23(24) is stopped temporarily by the V-shaped guide 27, the grip pieces 312, 312 can be engaged with the ankle part 8 with ease.

As the ankle part 8 is protruded from the tapered end of the V-shaped guide 27 through the clearance s1 sufficiently due to the friction force exerting on the work 1 on the belt conveyor 23(24) due to transfer of the belt in the direction of the arrow a, the grip position of the ankle part 8 to clutch by the grip pieces 312, 312 can be secured at a position adjacent the tapered end of the V-shaped guide 27 and outside the variation range j of the clamp position i, outside in direction to the knee joint side of the lower femurbone 2.

By allowing the work 1 to move down by its own gravity while sliding along the taper parts of the depressions of the grip pieces 312, 312, the grip position can be coincided with the clamp position. The grip pieces 312, 312 are closed, that is distance between them is program-controlled to be narrowed in synchronism with the moving down and sliding movement of the work 1, so the work 1 can be held with certainty in the hollow formed by the depressions 313, 313 of the grip pieces 312, 312, and occurrence of failure in holding the ankle part 8 and occurrence of damage thereof can be prevented.

By allowing the movement trace of the grip pieces 312, 312 to come near the clamping board 321, shifting over of the work 1 can be performed smoothly and without fail.

As the belt conveyor 21(22) is also used for pre-treatment in the pre-treatment station 20, construction of the pre-treatment station 20 can be simplified.

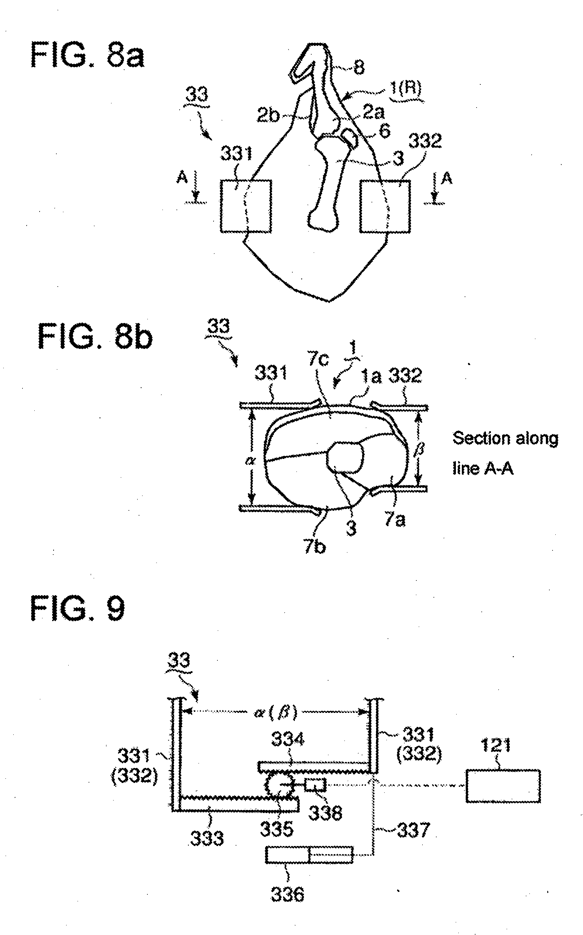

A left and right discrimination device 33 for judging whether the work 1 is a left leg or right leg is provided adjacent to the clamping board 321. After the work 1 is hanged by the clamping board 321 with the fat layer 1a facing toward the clamper 11, the work 1 is stopped once in front of the left and right discrimination device 33 on the way it is pushed by an air cylinder 322 toward the clamper 11. Whether the work 1a is left or right leg is judged. Hereinafter, construction of the left and right discrimination device33 will be explained with reference to FIGS.8a, 8b and 9.

Referring to FIGS.8a and 8b, the work 1 stopped in front of the discrimination device 33 is pinched by a pair of measuring arms 331 and a pair of measuring arms 332. Driving device of the pair of measuring arms 331 (332) will be explained referring to FIG.9. In FIG.9, the measuring arm 331(332) has a rack 333(334) extending perpendicular to the arm 331 (332) . Each of the racks 333 and 334 engages with a pinion 335 located between the racks.

A piston rod 337 of an air cylinder 338 is connected to one of the measuring arms of the pair of the measuring arms 331(332). Distance α(β) between the arms of the pair of arms 331 (332) can be adjusted by actuating the air cylinder 336. An encoder 338 is connected to the pinion 335 to detects rotation angles thereof or count the number of rotation thereof. As the air cylinder 336 is actuated by air which is compressible fluid, the pair of measuring arms 331(332) stops automatically when it clamps the work 1 and receives reaction force of certain strength from the work 1.

A detection signal of the encoder 338 is sent to a left or right judging means 121 built-in in the controller 120, and the left or right judging means 121 computes the distance α (β). Difference has occurred between the thickness of the left and right legs as a result of removing hipbone 4 in the pretreatment station 20. FIGS.8a, 8b show a case of right leg (work 1(R)). Distance α and β are compared and it is judged that the work 1 is a right leg (work 1(R)) when α > β and that work 1 is a left leg (work 1 (L)) when α < β. By the left and right judging device 33 of this construction, measurement is performed in a state the work 1 is remaining stationary and left or right of the work 1 is judged by the difference of thickness of the thigh meat between the left and right thereof, so left or right of the work 1 can be judged rightly. Further, the left and right judging device is constructed simply.

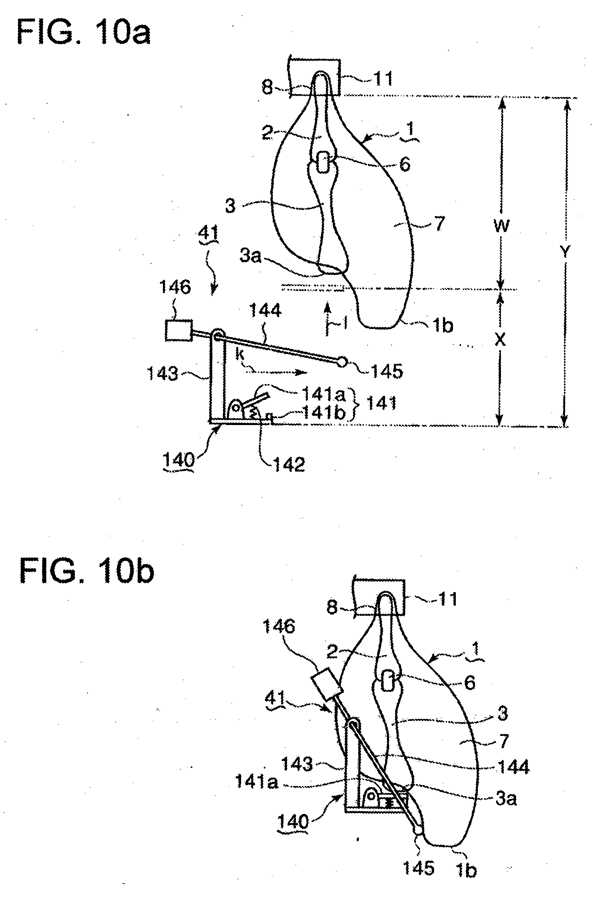

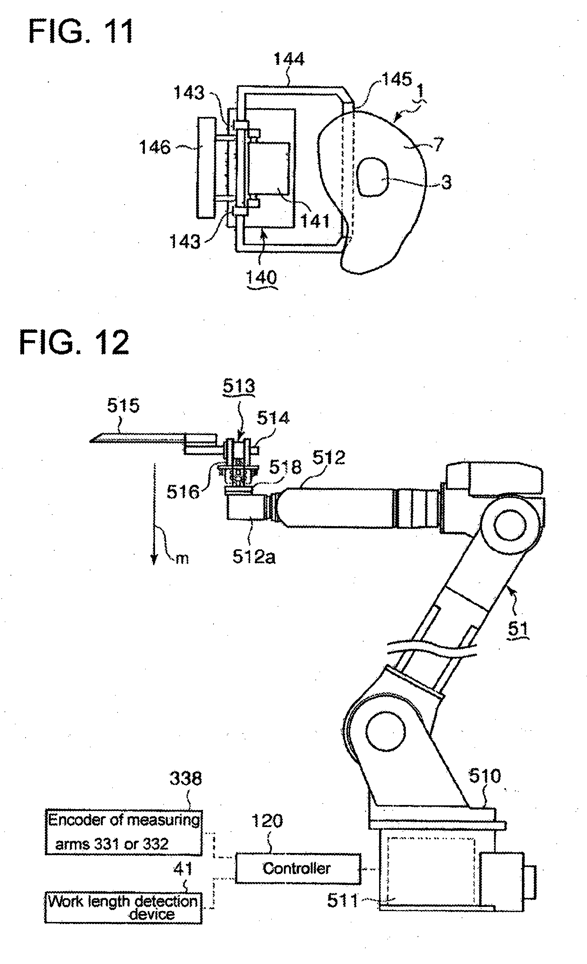

After the work 1 is left or right leg part is judged, it is mounted to the clamper 11. The clamper 11 is transferred by the driving device 13 in the direction of the arrow b at a constant speed and reaches the initial incision making station 40. The clamper 11 stops in front of a work length detection device 41 in the initial incision making station 40. Composition of the work length detection device 41 will be explained with reference to FIGS.10a, 10b and 11.

In FIGS.10a, 10b, and 11, a base bracket 140 is provided facing the work transfer line. The base bracket 140 is provided with a proximity switch or limit switch 141 (hereafter referred to as a switch 141) consisted of a switch bar 141a and a contact point 141b. A coil spring 142 is provided between the switch bar 141a and the base bracket 140 so that the switch 141 is switched off unless force is applied to the switch bar 141a. When the base bracket 140 is moved up and the switch bar 141a pushed down by the work 1 to be brought to contact the contact point 141b, the switch 141 is switched on, and the lift X of the base bracket is determined upon switching on of the switch 141.

As shown in FIG.11, two supporter pillars 143 are attached to the base bracket to erect upright, and an arm 144 shaped like a rectangular frame is supported by the supporter pillars swingable. A side of the rectangular arm 144 opposite to the side thereof supported by the supporter pillars 143 is formed into a pusher bar 145 for pushing away the work 1.A counter weight 146 is attached to the arm 144 at the opposite side of the pusher bar 145 so that the arm 144 takes a nearly horizontal attitude unless force is applied to the arm 144. As shown in FIG.11, length of the arm from its supported point to the pusher bar 145 is longer than horizontal length of the base bracket 140, so the arm 144 can be swung until the pusher bar 145 is below the base bracket 140.

As the work 1 is deprived of the hipbone 4, the lower part thereof is scooped out deeply and the femoral head 3a is exposed. The femoral head 3a is not so apart from the lower end part 1b of the work 1. Therefore, if the arm 144 is not provided, there may occur that the switch bar 141a may contacts the end part 1b of the work 1 when the switch bar 141a approaches the work 1 and false operation occurs. Determination of the work length is performed as follows: first the base bracket 140 is advanced in the direction of an arrow k, and the pusher bar 145 forming a forefront part of the arm 144 is brought to a position ahead of the femoral head 3a. Then, the base bracket 140 is lifted up in the direction of an arrow I.

When the base bracket 140 is advanced and lifted toward the work 1, the pusher bar 145 touches against the lower end part of the work 1 and pushes it away, so occurrence of contact of the switch bar 141a with the lower end part 1b of the work 1 is prevented. The arm 144 swings downward and rotates upon receiving reaction force from the work 1, and the switch bar 141a contacts the femoral head 3a and is pushed down as the base bracket 140 further moves up until the switch bar 141a contact the contact point 141b. This state is shown in FIG.10b.

Lift X of the base bracket 140 at the time the switch bar 141a contacts the contact point and the switch 141 is switched on is determined. Distance Y from the clamper 11 to the bottom of the base bracket 140 before the base bracket 140 is moved is a given value, and length W of the work 1, i.e. distance between the clamp position of the ankle part 8 of the work 1 clamped by the clamper 11 and the femoral head 3a, can be determined by subtracting X from Y.

With the work length detection device 41 of this composition, first the pusher bar 145 contacts the lower part 1b of the work 1 and pushes away the lower part 1b, then the switch bar 141a get near to the femoral head 3a, so occurrence of false operation due to occurrence of contact of the switch bar 141a with the lower end part 1b of the work 1 is prevented. Therefore, the switch bar 141a can contact the femoral head 3a without fail and work length W can be determined accurately with certainty.

The measurement result is used to change over the incision making operation program in the first to third incision making stations 50-70, to determine a start point and end point of knee cap side cutting performed in the last incision making station 80, and to determine a start point and end point of thig-meat scrape-off process performed in the thigh-meat scrape-off station 100.

Next, in the initial incision making station 40, the work 1 is passed between a pair of round blade cutters 42 disposed horizontally sandwiching the transfer line 12 to make incision all around at a part of the lower femurbone 2 just under the clamper 11 (a part indicated by a line d in FIG.2) in order to enable meat scraping in a succeeding process. The clamper 11 is rotated when the work 1 is passed between the pair of round blade cutters 42 to make the incision all around the ankle part 8. An escape device is provided to allow the round blade cutters to retreat when the round blade cutters receive excessive reaction force from the work 1. The bone of the ankle part 8 of the work 1 is prevented from being cut by the round blade cutters by the escape device.

Then, longitudinal incisions are made. Three kinds of incisions are made in each of the first incision making station 50, second incision making station 60, and third incision making station 70. Vertical 6-spindle multi-joint arms 51, 62, and 71 for making incision, each having a cutter blade at its forefront part and each being of the same construction, are arranged along the transfer line 12. Construction of the incision-making arm will be explained taking the 6-spindle multi-joint arm 51 as an example with reference to FIGS.12 to 14.

In FIGS.12∼14, a cutter tool 513 is attached to an end part 512a of an arm 512. The cutter tool 513 consists of a base bracket 516, a swing shaft 514 supported swingably by the base bracket 516, and a knife-shaped cutter blade 515 attached to the swing shaft 514 at a position offset toward a direction opposite to the advance direction m of the cutter blade 515. The cutter blade 515 is a double-edged one having a V-shaped edge in a section perpendicular to the advance direction m of the cutter blade.

By positioning the swing shaft 514, by the swing of which the cut-in angle n of the cutter blade 515 is determined, nearer to the arm 512 than the cutter blade 515, the point of application of force to drive the cutter blade 515 is advanced toward the cutter blade advance direction m than the actual contact position of the cutter blade 515 to the bone and meat, so the cutter blade 515 can be moved along the surface of the bone.

The base bracket 516 to which the cutter blade 515 is attached is slidable in directions p perpendicular to both the axial direction of the arm 512 and the advance direction m of the cutter blade 515. A slide device 517 for sliding the base bracket 516 comprises a base plate 518 fixed to the arm 512 at its end part 512a to expend in a direction p perpendicular to both the arm 512 and the advance direction m of the cutter blade 515, a linear guide rail 519 mounted on the base plate 518 along its longitudinal direction, and a linear guide bar 521 supported by the base plate 518 at a position above the linear guide rail 519. The base bracket 516 is mounted on the linear guide rail 518 and penetrated by the linear guide bar 521 such that the base bracket 516 is slidable along the linear guide rail 513 and linear guide bar 521.

Coil springs 522 are provided to both sides of the base bracket 516 to surround the linear guide bar 521 so that the base bracket 516 is positioned at the central part of the linear guide bar 521 urged by the elastic force of the coil springs 522.

As just described, the cutter blade 515 is attached to the arm 512 such that the cutter blade is movable in the direction of the arrow p which is perpendicular to the advance direction m of the cutter blade and at the same time such that the cut-in angle n of the cutter blade is variable around the center of the swing shaft 514 by means of an elastic supporting device 523.

In this way, the cutter blade 515 can follow the bone smoothly in accordance with variations in thickness and length of the bone.

In the first incision making station 50, the cutter tool 513 is operated so that an incision is made from the upper part of the knee joint 5 of the work 1 to the lower end of the femurbone 3 as indicated by e in FIG.2 and FIG.16c. On this occasion, the edge part of the cutter blade 515 is allowed to reach the surface of the femurbone 3 such that the side face of cutter blade 515 contacts the surface of the femurbone 3, and the cutter blade 515 is allowed to move down with the middle part thereof moving down along a membrane between a knuckle meat part 7a (shintama in Japanese) and inner thigh meat 7b.

If the cutter blade 515 inserts into meat part too deep from the surface of the femurbone, it will hurt the meat. Therefore, operation of the cutter blade 515 in the incision making process is controlled by the controller 120 shown in FIG.4. In the controller 120 are memorized 6 kinds of incision making operation programs 122 based on whether the work 1 is a right or left leg and whether the length thereof is long or middle or short.

The detected signal of the encoder 338 of the left and right discrimination device 33 in the mounting station 30 is inputted to the left and right discrimination means 121 of the controller 120, and Judgment whether the work 1 is a left or right leg is performed by the discrimination means 121. The lift x of the base bracket 140 measured by the work length detection device 41 in the initial incision making station 40 is inputted to a calculation means 124, which calculates the work length W. An incision making operation program most suited for the work 1 to be made incision is selected from among the memorized incision making operation programs 122 by a program selecting means 123 based on these results of judgment and calculation.

A control signal according to the selected incision making operation program is sent from the controller 120 to a cutting tool driving device 511. As shown in FIG.12, the cutting tool driving device 511 is attached to a base 510 of the arm 51 for allowing incision making to be performed. The cutter tool 513 is driven by means of the cutting tool driving device 511. Incision making in the first to third incision making stations is performed by means of the 6-spindle multi-joint arms 51, 61, and 71 composed as mentioned above-respectively

Although an incision making operation program to control operation trajectory of the cutter blade 515 is selected in accordance with right or left leg and length of the work 1, it is unpreventable that there occurs an error due to difference in size of individual work 1. Fine adjustment to compensate the error is performed by the elastic supporting device 523 which enables two-degree-of-freedom movement of the cutter blade 515, that is, both the adjustment of position of the cutter blade 515 by means of the slide device 517 and adjustment of cut-in angle n of the cutter blade 515 by swinging the cutter blade which is attached to the swing shaft 514.

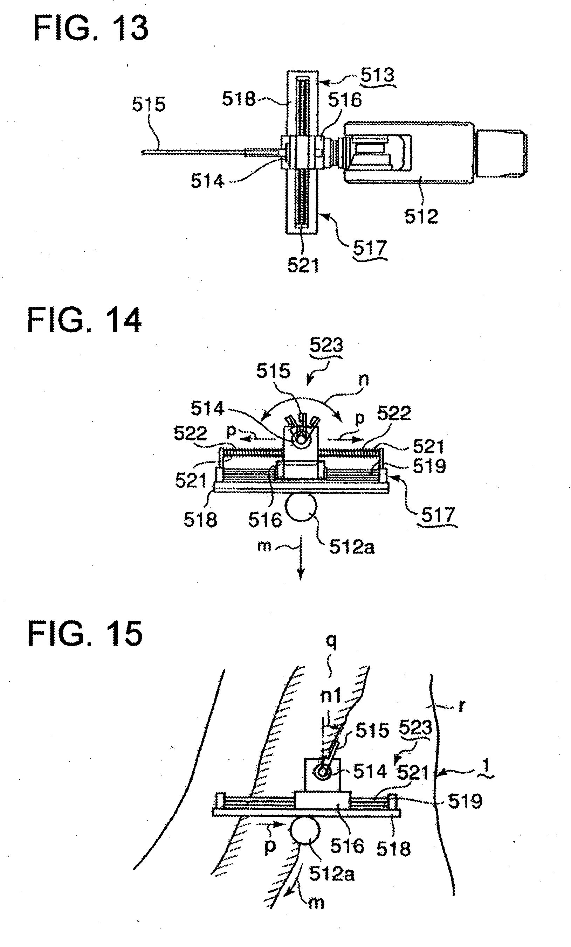

Incision making operation of the cutter blade 515 will be explained referring to FIG.15. An initial position of the cutter blade 515 is set in the incision making operation program at a position the work 1 contacts the surface of the bone q of the work 1. Therefore, as shown in FIG.15, the cutter blade 515 is first inserted into the meat until it contacts the bone q according to the incision making operation program. An error between the initial position of the bone set in the program and actual position of the bone q due to difference in size of individual work 1 is compensated by allowing the base bracket 516 to slide on the linear guide rail 519 in directions p due to reaction force which the cutter blade 515 receives from the bone q.

When the end part 512a of the arm 512 moves from the initial position in the advance direction m of the cutter blade according to the incision making operation program, the cutter blade 515 receives reaction force from the surface of the bone q while advancing along the surface of the bone q and the swing shaft 514 rotates. By the rotation of the swing shaft 514, the cut-in angle n of the cutter blade 515 is adjusted to n1 with which the cutter blade 515 advances smoothly along the bone q without biting into the bone.
The cutter blade 515 advances along the surface of the bone q while compensating the error between the incision making operation program and actual bone due to difference in size of individual work 1, and at the same time can be rotated about the center of the swing shaft 514 in a direction parallel to the surface of the bone q by the reaction force from the bone. As the swing shaft 514 is positioned nearer to the end part 512a of the arm 512 than the cutter blade 515, the cutter blade 515 can be rotated to be parallel to the bone q.

Therefore, the cutter blade 515 can advance along the bone without biting into the surface of the bone q and also without departing from the surface of the bone q. Accordingly, incision can be made smoothly along the surface of the bone q in the longitudinal direction thereof smoothly and the cutter blade can advance between the bone q and meat r accurately, so yield of meat can be increased when performing deboning operation.

In the first to third incision making stations 50 to 70, in order to make it easy for the cutter blade 515 of the incision making arm 51 to reach the position to perform incision, the work 1 is rotated by about 45° in clockwise direction when it is a right leg (work 1 (R)) and the work 1 is rotated by about 45°in anticlockwise direction when it is a left leg (work 1 (L)) by allowing a clamper driving device 15 to operated in accordance with judgment of the left-or-right-of-the work judging means 121.

In the second incision making station 60, such an incision is made that the cutter blade 515 inserts into a calf meat part 7d (chimaki in Japanese) from the upper part of the lower femurbone 2, the front edge of the cutter blade further advances passing the side of the knee cap 6 and reaches the lower part of the knee joint 5. This incision is indicated by a line f in FIG.2 and FIG.16b, 16c. The incision line f in FIG.16c rotated by about 90° relative to the incision line f in FIG.16b. This is because the lower femurbone 2 is twisted relative to the femurbone 3 and the incision line f runs along the bones, so the incision line f appears at a twisted position in FIG.16c.

In the third incision making station 70, incision is made from an upper part of the lower femurbone 2 passing the knee joint 5 along the femurbone 3. This incision is indicated by g in FIG.2 and FIG.16b and 16c.

Although an incision making arm is provided for each of the first to third incision making stations separately, it is allowable to provide a single incision making arm to perform incision making of the three kinds when transfer speed of the work 1 is set at low speed.

Next, composition of a fixing means of the work 1 in the first to third incision making stations will be explained. Each of the work fixing means used in each incision making station is the same in construction, and the explanation will be done taking a case in the first incision making station 50 as an example referring to FIG.1, FIG.17, FIG.18a, and FIG.18b.

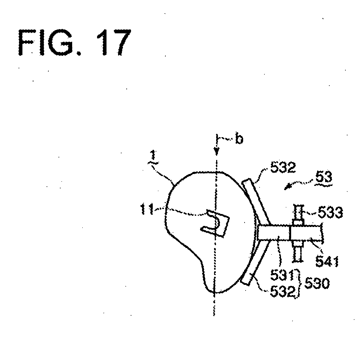

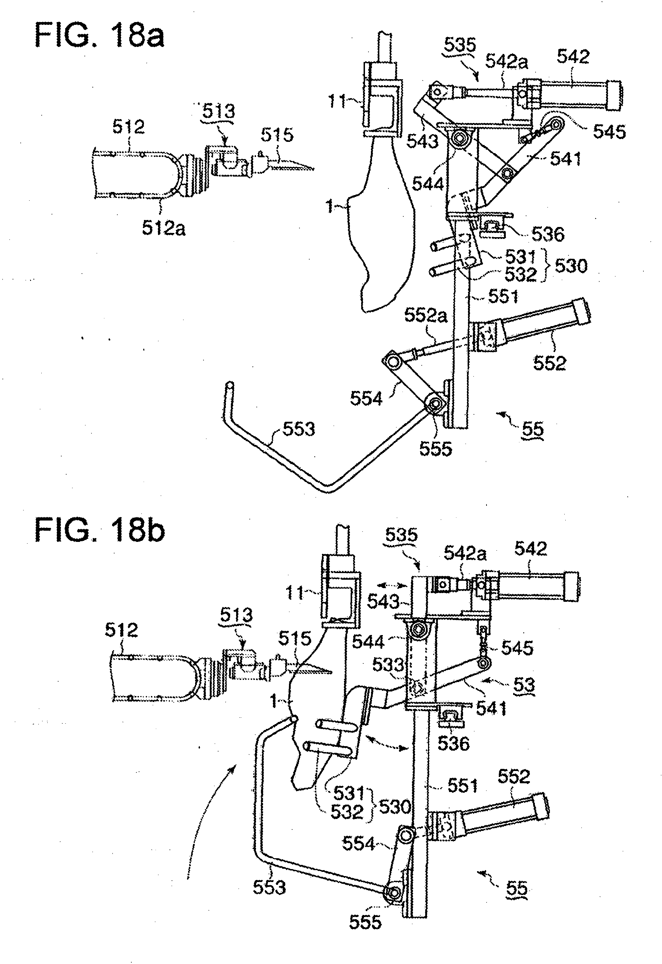

In FIG.1, a back support device 53 for supporting the work 1 from the back surface (fat layer 1a side) thereof is provided at a position facing the incision making arm 51 with the transfer line of the work 1 between. In FIG.17, 18a, and 18b, the back support device 53 has a backside supporting member 530 consisting of a base member 531 and pairs of support arms 532 of which the arms of each pair extend from the base member 531 toward both sides and slant forward so that the support arms 532 can contact the backside of the work 1.

A bracket 541 to which the backside supporting member 530 is fixed is supported by a transfer head 535 movable in the transfer direction p of the work 1. The transfer head 535 is fitted slidably to a linear guide 536 provided to run parallel to the work transfer direction b so that the backside supporting member 530 is moved smoothly and stably without shaken by the force exerted on the work 1 due to incision making operation. To the transfer head 535 is attached an air cylinder 542 of which the piston rod 542a is connected to an end side of a link member 543. The link member 543 is supported by a shaft 544 fixed to the transfer head 535 rotatably about the shaft 544.

The other end of the link member 543 is connected to a middle part of the bracket 541 and the free end of the bracket is connected to an end of a link bar 545. With the composition, the backside supporting member 530 can be moved to approach or depart from the work 1 suspended from the clamper 11 in a double-headed arrow.

Next, driving device of the transfer head 535 will be explained with reference to FIG.1. In FIG.1, the transfer head 535 is connected to a timing belt 538. The transfer head 535 can be transferred in the transfer direction b in synchronism with the clamper 11 by driving (rotating) the timing belt 538 by a servomotor 539.

When making incision, the transfer head 535 moves in the transfer direction b at the same speed and in synchronism with the clamper 11. As shown in FIG.18a, when incision is not performed, the backside supporting member 530 is retreated from the work 1. As shown in FIG.18b, when incision is performed, the air cylinder 542 is operated to allow the backside supporting member 530 to approach the work 1 suspended from the clamper 11 to support the work 1 from its backside. In the first to third incision making stations, the back support device 53 is provided separately for each station. When incision making operation is finished and the cutter blade 515 retreats from the work 1, the air cylinder 542 is actuated to retreat the backside supporting member 530 in each of the back support device. The backside support device 53 is moved by the actuation of the servomotor 539 in a direction opposite to the transfer direction b to be returned to its initial position.

As the backside supporting device 53 is composed such that the base member 531 and support arms 532 of the backside supporting member 530 support the back surface of the work 1, the work 1 can be held stable against the force exerting from the cutter blade 515. By holding the work 1 by the backside supporting member 530 in a state the work 1 is slanted, incision making operation by the cutter blade 515 can be facilitated. Further, as the transfer head 535 is driven by the servomotor 539, transfer speed can be controlled, so the servomotor can accommodate arbitral transfer speed of the work 1. Furthermore, the backside supporting member 530 can be returned to its initial position at a speed of two or three timed the transfer speed, because it is in a state of no load. Therefore, it can accommodate speeding up of work transfer speed.

Programs mentioned below for allowing each of a plurality of incision making arms to make a plurality of kinds of incisions are memorized in the controller 120.

In the controller 120 shown in FIG.4 are set beforehand a plurality of programs to judge right or left-leg of the work 1 and determine movement of the cutter tool 513 in accordance of the length of the work 1 as incision making operation programs 122. Two or more incision lines are determined, movement of the cutter blade is determined in correspondence with the determined incision lines, and each of a plurality of incision making arms is allowed to perform incision along a specific incision line.

In the controller 120, a program to be used to perform incision along a specified line is selected from among these programs and a control signal for controlling movement of the cutter tool 513 is sent to the plurality of the incision making arms. In this way, a series of incision making operations are performed by the plurality of incision making arms.

Three incision lines are determined in the embodiment as an example. Incision from a part above the knee joint 5 to the lower end of the femurbone 3 is specified to be performed by the first incision making arm 51 and the arm 51 is operated to make incision indicated by the line e in FIG.1 and FIG.16c. Incision from an upper part of the lower femurbone 2 to part below the knee joint 5 is specified to be performed by the second incision making arm 61 and the arm 61 is operated to make incision indicated by the line f in FIG.16b and 16c.

Incision from an upper part of the femurbone 3 to a part below the knee joint 5 passing along the side of the knee cap 6 is specified to the third incision making arm 71 and the arm 71 is operated to make incision indicated by the line g in FIG.16b and 16c.

When controlling the operation of the first incision making arm 51, an appropriate program is selected from among the incision making operation programs 122 by the program selecting means 123 based on right or left leg of the work 1, length of the work 1, and a line of incision specified by the incision making arm 51, and a control signal to the cutting tool driving device 511 of the incision making arm 51 to control movements of the cutter tool 513 and incision making arm 51.

When controlling the operation of the first and second incision making arm 61 or 71, similarly as mentioned above, an appropriate program is selected from among the incision making operation programs 122 by the program selecting means 123 based on right or left leg of the work 1, length of the work 1, and a line of incision specified to the incision making arm 61 or 71, and a control signal is sent to the cutting tool driving device of the incision making arm 61 or 71 to control movements of the cutting tool of the incision making arm 61 or 71 and the incision making arm 61 or 71.

By making the controller to practice the program which assign a specified task to each of the incision making arm 51, 61, and 71, it is made possible to perform fast and accurate incision making operation, and at the same time yield of meat can be increased and productivity is raised.

By determining three incision lines as mentioned above, incision making operation can be performed efficiently, scraping of meat into which the incisions are made performed in the succeeding process can be performed smoothly and productivity can be further increased.

It is permissible to adopt the construction mentioned above in the last incision making station detailed later.

Next, the method of making incision in the first to third incision making stations will be further detailed.

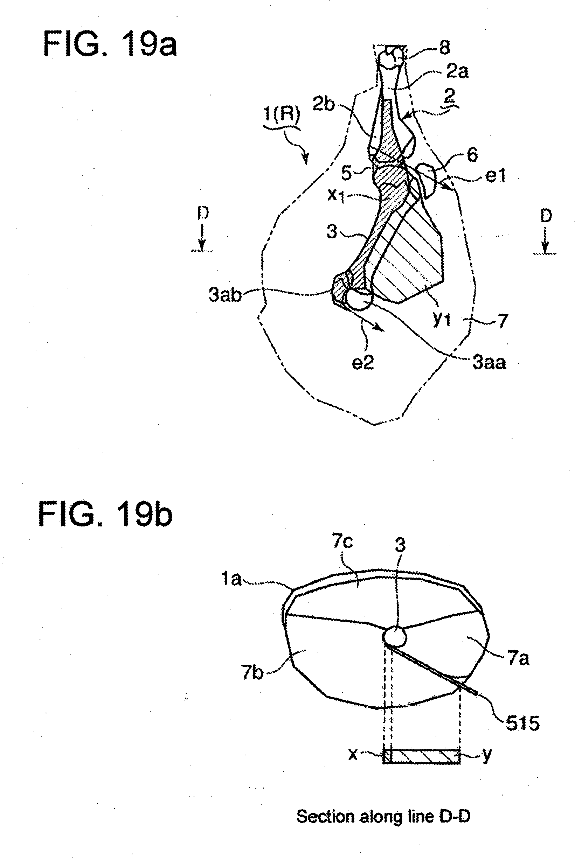

First, a method of making incision in the first incision making station 50 will be explained taking right leg (work 1 (R)) for an example with reference to FIGS.19a and 19b. FIG.19a is a longitudinal section of the work 1 (R) with the hipbone removed as is in the case of FIG.16a and FIG.19b is a section along a line D-D in FIG.19a. In the drawings, fine-hatched parts x indicate the incision along the surface of the bones and a coarse-hatched part y indicates the incision in the meat part 7. Reference numeral 3aa is a head and 3ab is a greater trochanter of the femurbone 3.

The incision line e in FIG.2 or FIG.16c consists of a incision line e1 and e2 shown in FIG. 19a. In FIG.19a, first the incision is made along the line e1 in the direction sown by an arrow. The incision line e1 serves to give a clue to facilitate intrusion of the cutter blade 515 between the membrane of the knuckle meat 7a and the membrane of the inner thigh meat 7b when cutting out with the incision line e2 the boundary between the knuckle meat 7a and inner thigh meat 7b. Therefore, the incision along the line e1 is performed in first.

Incision along the line e1 is started by making cut-in by the cutter blade 515 at the tibia 2a of the lower femurbone 2, the cutter blade advances to the knee joint part 5 while disconnecting the membrane at the corner part of the tibia 2a. The cutter blade 515 is intruded between the membranes at the boundary of knuckle meat 7a and inner thigh meat 7b until the front edge part of the cutter blade 515 reach the surface of the femurbone 3 to start incision along the line e2 continuing to the incision along the line e1. The boundary between the knuckle meat 7a and inner thigh meat 7b is cut with the middle part of the cutter blade 515. After the cutter blade 515 advances to the femur head 3aa, the cutter blade moves to the side and end part of the greater trochanter 3ab to end the incision along the line e2.

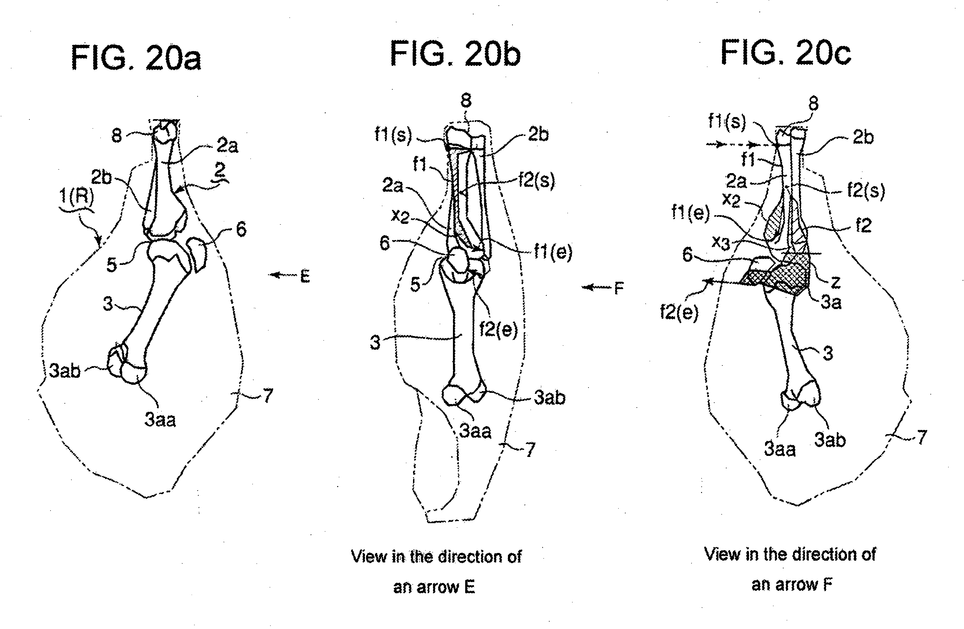

Next, the method of making incision in the second incision making station 60 will be explained with reference to FIGS.20a, 20b and 20c. Here, also the work 1 (R) is taken for an example. The incision line f consists of an incision line2 f1 and f2. First, incision along the line f1 is performed. In the case of a right leg, the start point f1(s) of the incision line f1 is determined at a position on the right side face of the end part of the ankle part 8 of the tibia 2a. The cutter blade 515 makes a cut-in at the start point f1 (s) and advances along the right side face of the tibia 2a to the side end part of the knee joint 5. On this occasion, depth of intrusion of the cutter blade 515 is such that the front edge of the cutter blade 515 reaches a middle part of the thickness (diameter) of the tibia as shown by a hatched part x2 in FIG.20b so that the cutter blade advances while cutting off the connection of the membrane of the calf meat 7d at the corner part of the tibia 2a.

As shown in FIG.20b, the cutter blade 515 is advanced from the start point f1(s) to an end point f1(e) near the knee joint part 5. By cutting off the membrane connection of the calf meat 7d to the corner part of the tibia 2a in this way, the calf meat 7d can be scraped off easily.

Next, incision along an incision line f2 is performed. This incision line f2 starts from a start point f2 (s) positioned at the middle part of the tibia 2a, and the cutter blade 515 is inserted between the tibia 2a and fibula 2b. Then the cutter blade 515 is advanced along the side face of the tibia 2a toward the knee joint part 5, and then the cutter blade 515 is advanced to the connecting part of the tibia 2a and fibula 2b as shown by a hatched part x3 in FIG.20c. The cutter blade further goes through while cutting the root part of the fibula 2b to separate the fibula 2b from the tibia 2a. In this way, ligaments and tendons concentrating in the knee joint part 5 can be cut off from the knee joint 5.

The cutter blade 515 further advances along the incision line f2 along the femurbone 3 near the knee joint 5 to reach the femur head 3aa and further, advances along the side face of the knee cap 6.

By the incision along the incision line f1 and f2, the biomedical tissue such as muscle, tendon, and ligament adhering to the lower femurbone 2 and knee joint part 5 can be removed easily. Therefore, meat scraping in the succeeding lower-thigh-meat scrape-off station 90 and thigh-meat scrape-off station 100 can be facilitated.

In the second incision making station 60 is provided the work holding device 55 shown in FIGS.18a and 18b. The work holding device 55 comprises an air cylinder 552 attached to the frame 551, a work holding bar 553, and a link bar for connecting the air cylinder 552 and work holding bar 553. The work holding bar 553 fixed to an end of the ling bar 554 and this fixed part is supported rotatably by a bracket 555 fixed to the frame 551. The other end of the link bar 554 is connected to a piston rod 552a of the air cylinder 552.

The work holding device 55 is used when a cross hatched part z of the incision line f2 in FIG.20c. When making incision near the knee joint part 5 and knee cap 6 (cross hatched part) on the incision line f2, the incision is made in the rear side of the work 1 relative to its front side which faces the incision making arm 61, so the work 1 is raised from the back face side thereof. Accurate incision can not be made when the work 1 is raised up, so the work holding bar 553 is used. As shown in FIG.18b, the air cylinder 552 is actuated and the work holding bar 553 is brought to touch on and push the front face of the work 1.

By pushing the work 1 from the front face thereof toward the backside supporting member 530 with the work holding bar 553, raising-up of the work 1 can be prevented and accurate incision making is made possible. The work holding device 55 is not needed when making the other incisions, the work holding bar 553 is retreated as shown in FIG.18a when it is not used.

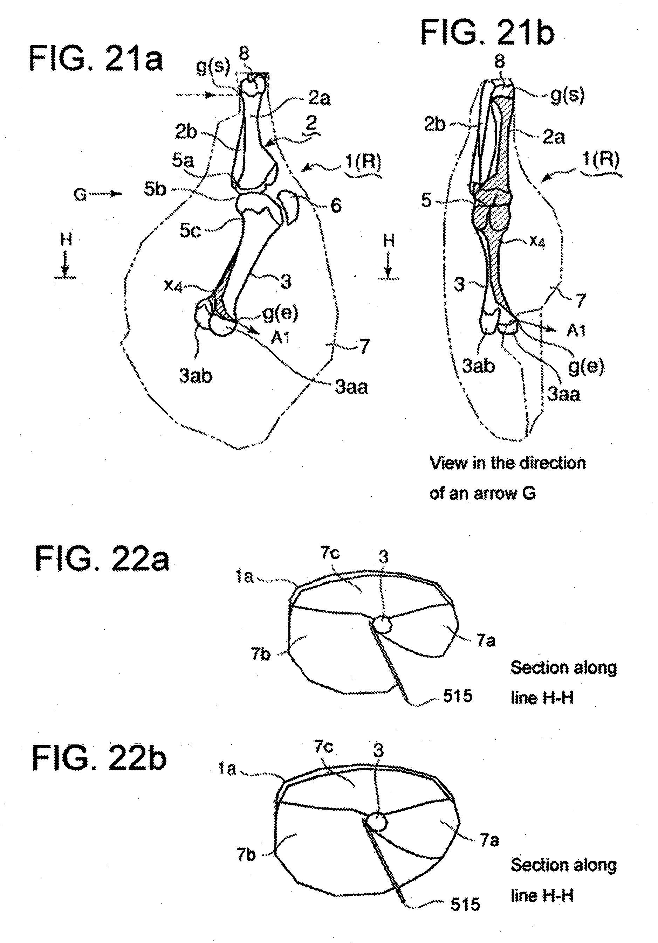

Next, the method of making incision in the third incision making station 70 will be explained with reference to FIGS. 21a, 21b, and FIG.22a. In these FIGS, the incision line g in this station starts from a cut-in at a start point g(s) at the end of the ankle part of the tibia 2a. The cutter blade 515 is advances from the start point g(s) along the side face of the tibia 2a toward the knee joint part 5 and further advances along the femurbone 3. On this occasion, depth of intrusion of the cutter blade 515 when it advances along the tibia 2a is such that the front edge of the cutter blade 515 reaches a middle part of the thickness (diameter) of the tibia and meat between the tibia 2a and fibula 2b is not cut as shown by a hatched part x4 in FIG.21b. (When the meat between the tibia 2a and fibula 2d is cut, the meat between the tibia and fibula separates off from the shank meat 7e, and the meat between the tibia and fibula remains on the bones in the succeeding meat scrape-off process.

As shown by the hatched part x4 in FIG.21b, the cutter blade 515 is intruded in the knee joint part 5 to such a depth that incision is made over the total width along the surface profile of the bones of the knee joint part 5. As shown in FIG.21a, surfaces of the bones near the knee joint part 5 depict a curve like a letter 3, and many tendons for connecting muscle to the bones are present at three points of 5a, 5b, and 5c near the knee joint part, so it is intended to cut the tendons near this part with certainty. Then, the cutter blade advances to the femur head 3aa along the side of femurbone 3, passing through the top part of the femurbone 3aa and ending the incision g at the ending point g(e).

The incision along the incision line g must be performed after the incision along the incision line e is performed. If the incision g is performed without performing the incision e, the cutter blade 515 cut off a right part(in FIG.22b) of the inner thigh meat 7b when the incision g is made along the side face of the femurbone as shown in FIG.22b shown for comparison.

Therefore, in the embodiment, the incision e is performed first to make incision between the knuckle meat 7a and inner thigh meat 7b as shown in FIG.16c, then the incision g is performed. In this way, the incision g can be performed without cutting off the right part of the inner thigh meat 7b.

As mentioned heretofore, incisions are made by using the 6-spindle multi-joint arms 51, 61, and 71 driven under incision operation programs in previous steps of the steps performed in the lower-thigh-meat scrape-off station 90 and thigh-meat scrape-off station 100, so incision making process can be automated. Further, as incision can be made corresponding with complicated three dimensional curves of the bones of the work 1, meat remaining on the bones can be decreased resulting in increased yield of meat.

Three of 6-spindle multi-joint arms are arranged along the work transfer line and each of three kinds of incision making operation is assigned to be performed by each of the three incision making arms, time for making all of the incisions can be reduced as compared with a case all of the incisions are made by a single incision making arm. Therefore, work transfer speed can be increased, and continuous deboning operation of the work 1 without stoppage is made possible, resulting in increased efficiency of deboning operation.

Judgment of right or left leg of the work 1 and determination of the work length are performed in the early step of the deboning process, a most suited program is selected for each of the incision making arms from among six kinds of incision operation programs based on the results of the judgment and measurement, and each of the 6-spindle multi-joint arms is actuated under the selected program. Therefore, the cutter blade 515 can be moved to match individual work 1 with high accuracy.

Furthermore, the cutter blade 515 is supported movable in directions p perpendicular to its advance direction m and swingable by means of the elastic supporting device 523, so an error of the trajectory of the cutter blade 515 due to difference in size of individual work 1 can be compensated by the elastic supporting device 523. Therefore the cutter blade 515 can be moved accurately along the surfaces of the bones, and yield of meat can be increased spectacularly.

By performing incision making operation in the first to third incision making stations 50, 60, and 70 in this order, that is, by making incision along the incision line g after incision along the incision line e is made, knuckle meat 7a, inner thigh meat 7b, and outer thigh meat 7c surrounding the shaft of the femurbone can be separated from the bone without hurting them. Thus, deboning can be performed .without decreasing commercial value of the meat.

Further, by performing incision along the incision line e → f → g in this order, deboning operation in the succeeding processes can be facilitated.

After the operation in the third incision making stations 70, the work 1 is transferred to the last incision making station 80a to perform a latter incision making operation. In this station, a round blade cutter device 81a for right leg and a round blade cutter device 81b for left leg are positioned facing each other with the transfer chain 12 between. In this station, incision is made with a round blade cutter along the side face of the knee cap in the longitudinal direction. Its incision line is indicated by a line h in FIG.2 and FIG.16c. In this case, as shown in FIG.4, a cutter drive changeover device 83 allows the round blade cutter device 81a for right leg or round blade cutter device 81b for left leg to be driven based on the result of judgment of the left or right judging means 121.

The result of judgment of the left or right judging means 121 is sent also to the clamper driving device 15. By operation of the clamper driving device 15, the front face of the work 1 (R) is allowed to face the round blade cutter device 81a for right leg and incision is made by the round blade cutter 81a when the work 1 is a right leg, and the front face of the work 1 (L) is allowed to face the round blade cutter device 81b for left leg and incision is made by the round blade cutter 81b when the work 1 is a left leg. The work 1 is transferred to the lower-thigh-meat scrape-off station 90 and thigh-meat scrape-off station 100 in the attitude as is. This gives that the work 1 is transferred always with.its knee cap 6 facing upstream of its transfer direction irrespective of its being right or left leg in the stations 80, 90, and 100.

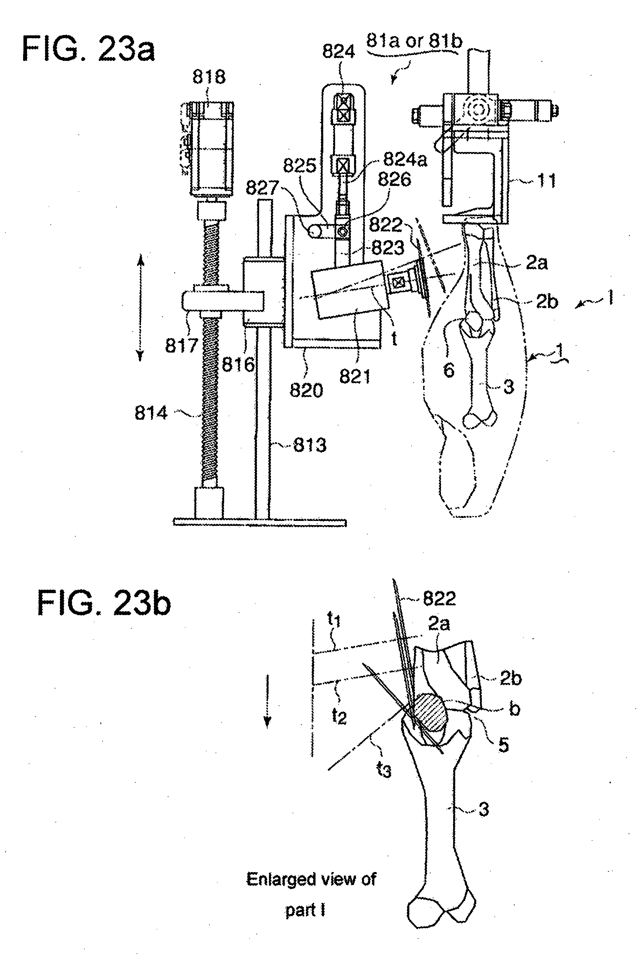

The method of making incision by the round blade cutter device 81a or 81b in the last incision making station 80 will be explained with reference to FIGS.23a and 23b. In FIG.23a, a columnar support 813 and a screw bar 814 are installed upright near the transfer line of the work 1. A cutter unit including a round blade cutter 822 and a casing 821 in which a driving device of the round blade cutter 822 is built-in is supported by a base bracket 820 via a bracket 823 fixed to the casing 821.

To the base bracket 820 is attached an air cylinder 824 of which a piston rod 824a is connected to the bracket 823. At this connecting part is connected rotatably an end of a link bar 825 via a shaft 826. The other end of the link bar 825 is supported rotatably by a shaft 827 fixed to the base bracket. The cutter unit can be rotated about the center of the shaft 827 by actuating the air cylinder 824, and blade tilt angle of the round blade cutter 822 which is perpendicular to the center axis t of the cutter unit can be changed relative to the work 1.

To the base bracket 820 is attached a guide member 816 having an arm part 817, the guide member being supported by the columnar support 813 to be slidable along it, the arm part 817 being engaged with the screw bar 814 by means of ball screw engagement. At the top of the screw bar 814 is provided a servomotor 818. The base bracket 820 can be moved in a vertical direction by actuating the servomotor 818.

The screw bar 814 being integral with an output shaft of the servomotor 818 rotates by actuating the servomotor 818 so as to move the arm part 817 engaged with the screw bar 814 in the vertical direction. In this manner, the guide member 816 having the arm part 817, and the base bracket can move in the vertical direction.

Height position of the base bracket 820 can be varied down to the millimeter. The movement speed of the base bracket 820 in the vertical direction can be adjusted by controlling the rotation speed of the servomotor 818. Height position of starting incision making with the round blade cutter 822 and incision making stroke of the cutter are changed in accordance with the work length detected by the work length detection device 41. As the incision starting position can be adjusted down to the millimeter and a starting position beat suited to individual work 1 can be selected, biting of the round blade cutter into the bone does not occur. The round blade cutter 822 can be move up and down smoothly at stable speed thanks to the ball screw engagement. Ending position of incision making can be adjusted so that yield of meat is increased.

As shown in FIG.23b, by actuating the air cylinder 824 to change the tilt angle of the center axis t from t1 to t3 in synchronism with moving down of the round blade cutter 822, the blade angle relative to the work 1 can be changed while moving down, and incision along the curved side face of the knee cap can be made. In this way, yield of meat around the knee cap can be increased.

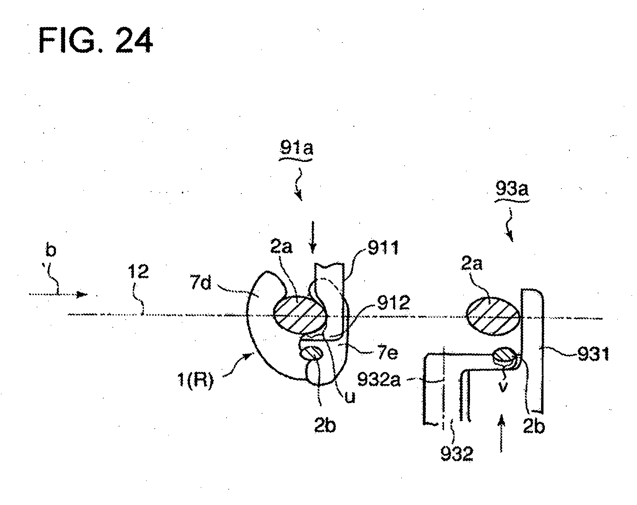

Next, scraping of meat around the lower femurbone is performed in the lower-thigh-meat scrape-off station 90. The procedure will be explained taking the right leg work 1 (R) for example with reference to FIG.24. In the last incision making station 90, the last incision making operation is performed in an attitude that the front face of the right leg work 1 (R) faces the round cutter device 81a for right leg and the front face of left leg work 1 (L) faces the round cutter device 81b for left leg, and the work 1 is transferred to the lower-thigh-meat scrape-off station 90 in the same attitude.

In the lower-thigh-meat scrape-off station 90 is performed meat ripping-off in two steps. In FIG.24, an interosseous scraper 911 having a protruded part 912 to be inserted between the tibia and fibula advances toward the transfer line 12 of the work 1 (R) and the protruded part 912 is inserted between the tibia 2a and fibula 2b. Then, the work 1 is lifted up in an oblique direction as the work 1 (R) is moved and meat around the lower femurbone is scraped off.

Then, a scraper 931 and a swing scraper 932 advances toward the transfer line 12 of the work 1 (R) from the opposite side to touch the work 1(R).

Then, the work 1 (R) is lifted up in an oblique direction as the work 1(R) is moved and meat around the lower femurbone is scraped off. The platy swing scraper 932 can be swung about a support shaft 932a in up and down directions and elastic force to push the swing scraper downward is applied by a spring not shown in the drawing.

In the first step, the interosseous scraper 911 is allowed to touch the back-side side face of the tibia 2a(part u in FIG.24) and meat around this part is scraped off with certainty, and in the second step, the scraper 931 and the swing scraper 932 are allowed to touch the outer periphery of the fibula 2b (part v in FIG.24) and meat around this part is scraped off with certainty. By performing meat scraping in two steps in this way, yield of meat can be increased.

As shown in FIG.1, in the lower-thigh-meat scrape-off station 90, lower-thigh-meat scrape-off devices 91a and 93a for right leg and lower-thigh-meat scrape-off devices 91b and 93b for left leg are provided facing each others with the transfer line 12 between. In the case of right leg work 1 (R), scraping-off of meat around the lower femurbone is performed by the first and second lower thigh-meat scrape-off devices 91a and 93a for right leg, and in the case of left leg work 1 (L), scraping-off of meat around the lower femurbone is performed by the first and second lower-thigh-meat scrape-off devices 91b and 93b for left leg. That is, result of judgment of right or left leg of the work 1 by the left or right judging means 121 is sent to a scraper drive changeover device 92, which select the lower-thigh-meat scrape-off device for right leg or that for left leg to be driven based on the judgment.

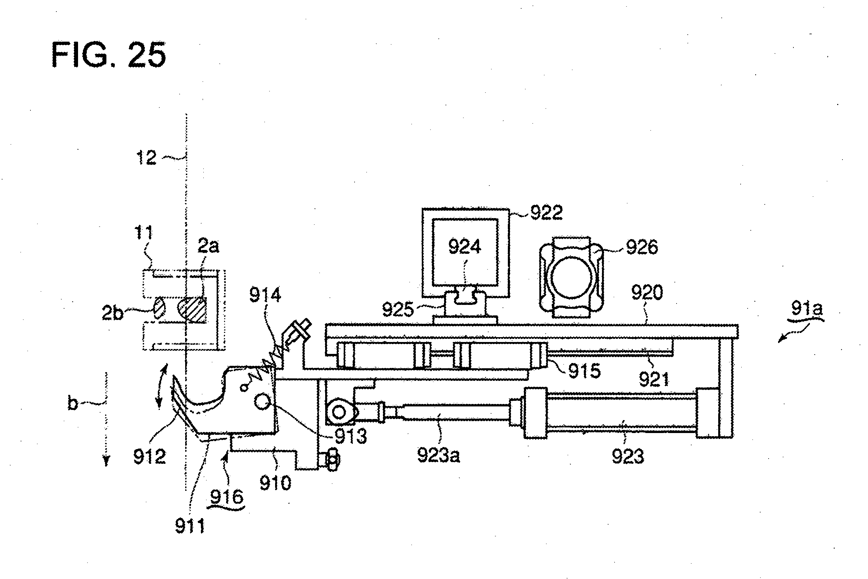

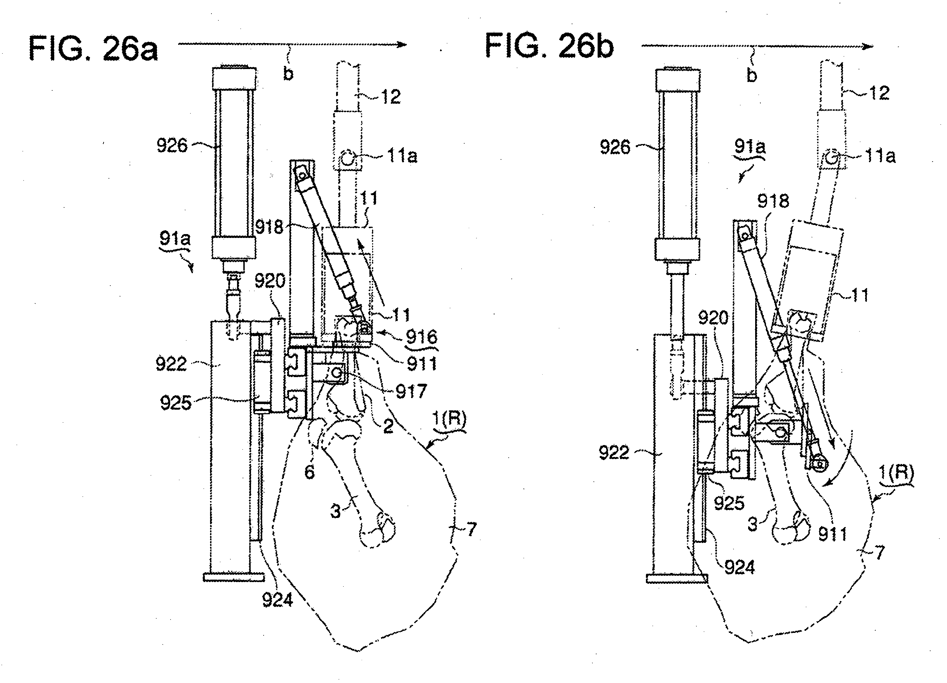

In FIG.25 and FIGS.26a and 26b is shown the first lower-thigh-meat scrape-off device 91a for right leg. The first lower-thigh-meat scrape-off device 91b for left-leg not shown in the drawings and the lower-thigh-meat scrape-off device 91a for right-leg are positioned symmetrically to each other about the transfer line 12. In FIG.25 and FIGS.26a, 26b, the platy interosseous scraper 911 has a protruded part 912 shaped like a sickle to be inserted between the tibia 2a and fibula 2b and having a concave portion 912a which the tibia 2a fits in, and is attached to a base bracket 910 swingable about a vertical shaft 913. Between the interosseous scraper 911 and the base bracket 910 is provided a coil spring 914, which supports the interosseous scraper 911 elastically and enable swing motion thereof about the vertical shaft 913.

To the base bracket 910 is fixed a slider 915 which is supported slidably along a guide rail 921 fixed to a frame 920. The base bracket 910 can be moved in lateral horizontal directions to approach or retreat from the transfer line 12 by actuating an air cylinder 923, of which a piston rod 923a being connected to the base bracket 910, attached to the frame 920.

The frame 920 has a slider 925, which is engaged with a guide rail 924 fixed to a columnar support 922 installed upright, and the frame 920 can be moved up and down by actuating an air cylinder 926.

A scraper unit 916 including the interosseous scraper 911 and coil spring 914 is supported by the base bracket 910 swingably about a horizontal shaft 917 fixed to the base bracket 910. To the base bracket 910 is attached an air cylinder 918 which applies force to the scraper unit 916 to keep it in horizontal attitude.

With the construction, when the right leg work 1(R) approaches the first lower-thigh-meat scrape-off device 91a for right-leg, the air cylinder 923 is actuated to push the base bracket 910 toward the transfer line 12 so that the interosseous scraper 911 is positioned under the transfer line 12. The interosseous scraper 911 is retained horizontal by the air cylinder 918, and when the work 1 reaches the interosseous scraper 911, the scraper 911 is inserted between the tibia 2a and fibula 2b and the tibia 2a fits in the concave portion 912a of the interosseous scraper 911. Meat scraping with the interosseous scraper 911 starts by moving of the clamper in the transfer direction b, and at the same time, by meat scraping is performed by allowing the frame 920 to move down by means of the air cylinder 926. Meat between the tibia 2a and fibula 2b, particularly meat around the part u in FIG. 24, can be scraped off with the interosseous scraper 911.

Air pressure of the air cylinder 918 is adjusted so that interosseous scraper 911 is swung to depart from the work 1 when force larger than a threshold value exerts on the scraper 911. Timing of end of the meat scraping can be obtained by calculating transfer position of the clamper 11 based on the work length detected by the work length detection device 41, so it is set such that the piston rod of the air cylinder 918 is advanced at a timing of "meat scraping end position + α". Even if the interosseous scraper 911 is stuck between the tibia and fibula, the scraper 911 can be extracted from the clearance by the actuation of the air cylinder 918 at this timing. This prevents the tibia 2a, fibula 2b, or bones at the joint part 5 from being broken unnecessarily, and thus broken pieces thereof never gets mixed in the meat or causes damages inside the meat, which results in reducing the value of the meat.

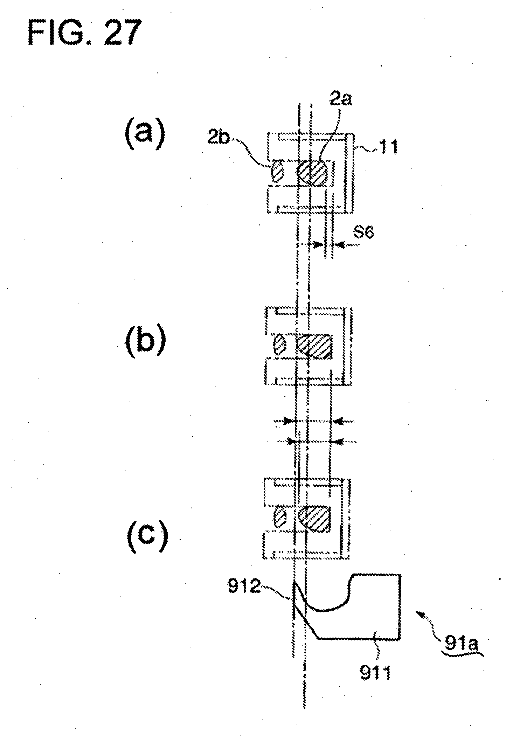

In FIG.27, (a) shows a case when a clearance s6 is in the recess of the clamper 11 between the tibia 2a and the bottom of the recess, (b) shows a case when the tibia 2a is large in width and the leading edge 912 of the interosseous scraper 911 is out of the clearance between the tibia 2a and fibula 2b, and (c) shows a case when there is no clearance between the tibia 2a and the bottom of the recess of the clamper 11 but the leading edge 912 of the interosseous scraper 911 is not completely out of the clearance between the tibia 2a and fibula 2b. As the interosseous scraper 911 is supported elastically by the coil spring 914 in the embodiment, deviation of the leading edge 912 from the clearance between the tibia 2a and fibula 2b can be compensated by elastic deformation of the spring 914 and the leading edge 912 of the interosseous scraper 911 can be inserted between the tibia 2a and fibula 2b in any case of (a), (b), and (c) . Therefore meat scraping is performed stably without fail.

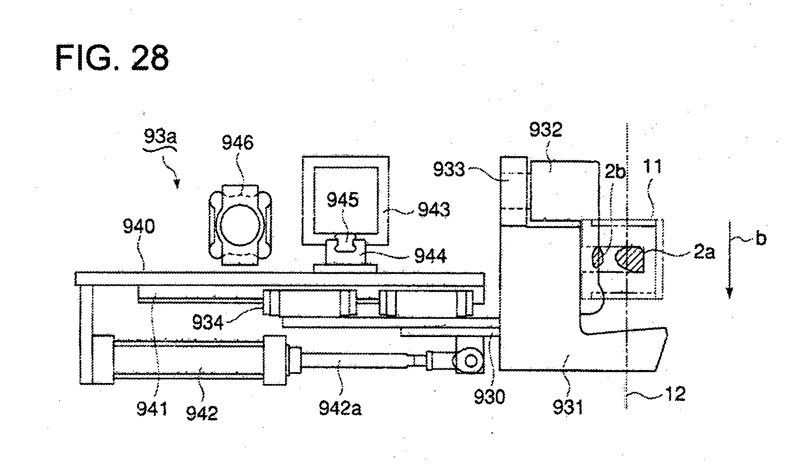

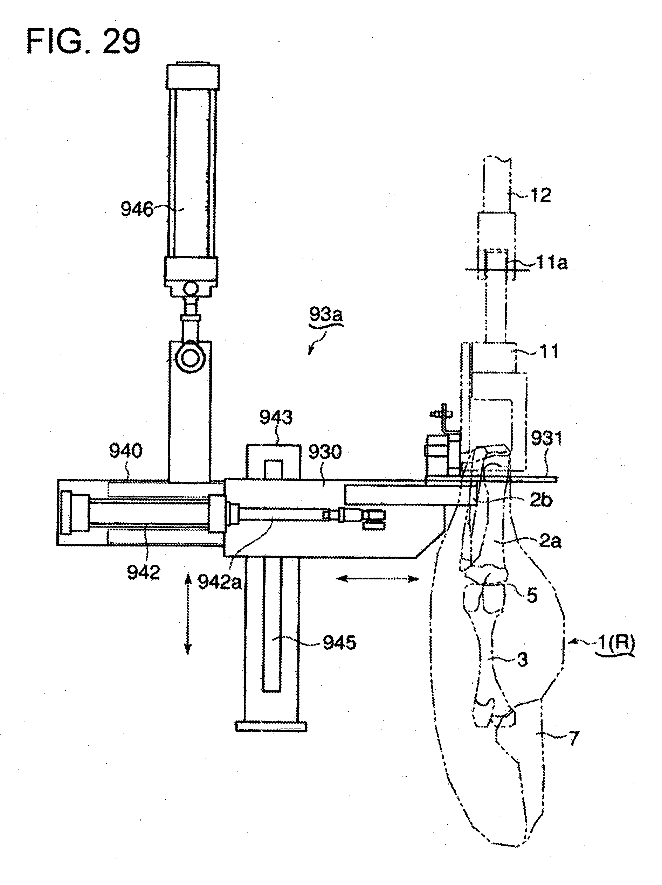

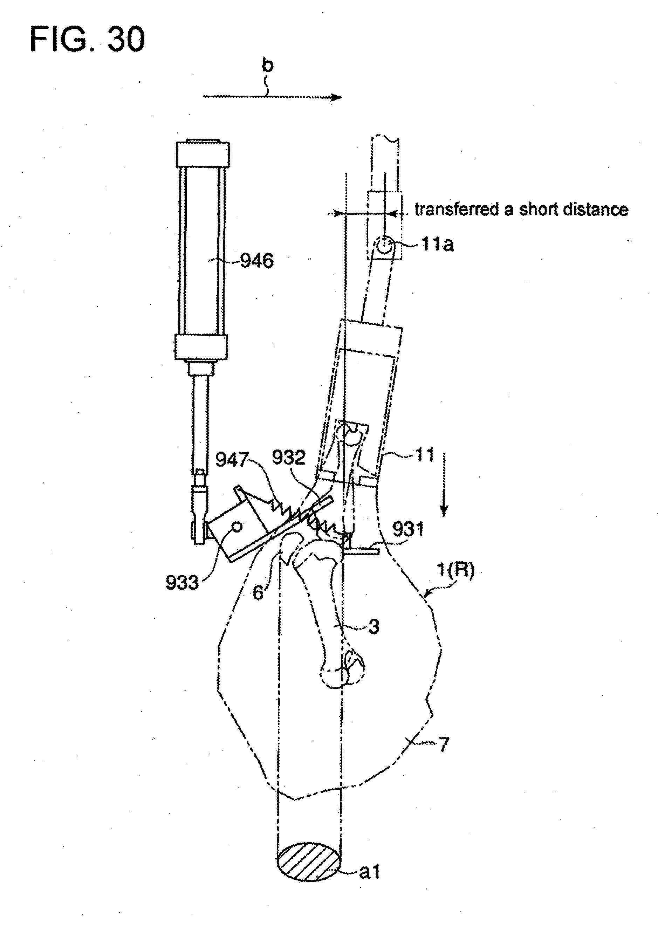

Next, construction of the second lower-thigh-meat scrape-off device 93a right-leg will be explained with reference to FIGS.28 to 30.In FIGS.28 and 30, a platy scraper 931 is fixed to a base bracket 930 at a position to face the transfer line 12. To the scraper 931 is attached a platy swing scraper 932 via a horizontal shaft 933 swingably about the horizontal shaft 933. A coil spring 947 is set between the swing scraper 932 and scraper 931 so that the swing scraper 932 is energized downward by the spring 947. A slider of the base bracket 930 is engaged with a guide rail 941 of the frame 940 so that the base bracket can slide relative to the frame 940.

A piston rod 942a of an air cylinder 942 attached to the frame 940 is connected to the base bracket 930. The base bracket 930 can be advanced toward or retreated from the transfer line 12 by actuating the air cylinder 942. A columnar support 943 is installed upright, and a slider 944 of the frame 940 is engaged with a guide rail 945 of the columnar support 943 so that the frame 948 can be slid vertically. The frame 940 is moved vertically by actuating an air cylinder 946 of which the piston rod is connected to the frame 940.

With the construction, the base bracket 930 is advanced toward the right leg work 1 (R) experienced meat scraping process by the first lower-thigh-meat scrape-off device 91a for right-leg to allow the scraper 931 and swing scraper 932 to touch the work 1(R). As the clamper 11 is moving in the transfer direction b at constant speed, the work 1 (R) is pulled by the clamper 11 and meat scraping by the scrapers begins. At the same time, the air cylinder 946 is actuated and the frame 940 is moved down, so meat scraping is finished while the work 1 (R) is transferred a short distance as shown in FIG.30.

In the lower-thigh-meat scrape-off station 90, meat scraping is performed by pulling the work 1 obliquely relative to the scrapers while the work 1 is transferred, meat scraping is performed without stopping the work 1. Therefore, the lower-thigh meat can be scraped off without changing the transferring speed which is decided for the whole deboning line and thus processing time can be reduced resulting in increased efficiency of deboning operation. As the clamper 11 is fixed to the transfer chain 12 via a swingably-supporting point 11a as shown in FIG.30, the work 1 can be inclined with its ankle part ahead easily.

As meat is scraped by moving down the frame 940 by pushing force applied from the air cylinder 946 while the work 1 is pulled, strong scraping force can be applied to the meat and steady and effective scraping of meat can be performed. Therefore, yield of meat can be increased.

Furthermore, as meat scraping can be finished while the work 1 is transferred a short distance by moving down the frame 940, space saving is possible, and in parallel, as the inclination of the work 1 is not so large, area of scraping as represented by a1 in FIG.30 is small. Therefore, meat scraping force per unit area can be increased, and in parallel, as the scrapers touch the bone directly, effect of meat scraping can be increased. Therefore, yield of meat can be increased.

Further, as the swing scraper 932 pushes the fibula part from above by the elastic force of the coil spring 947, meat scraping effect thereof can be increased.

As the swing scraper 932 swings upward as the work 1 is moved upward following the surface profile of the fibula 2b to avoid unnecessary load on the fibula 2b. Therefore, meat around the fibula 2b can be scraped off along the bone with increased yield rate without damaging the fibula 2b.

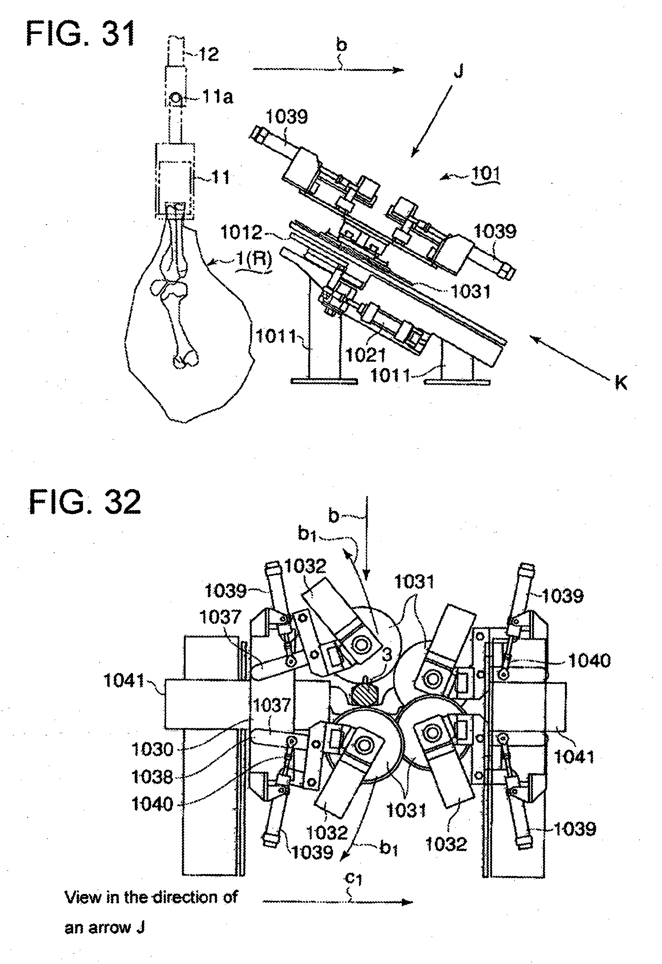

Next, thigh meat is scraped off in the thigh-meat scrape-off station 100. As shown in FIG.1, a thigh-meat scrape-off device 101 is provided in the thigh-meat scrape-off station 100. Construction of the thigh-meat scrape-off device 101 will be explained with reference to FIGS.31 to 35.

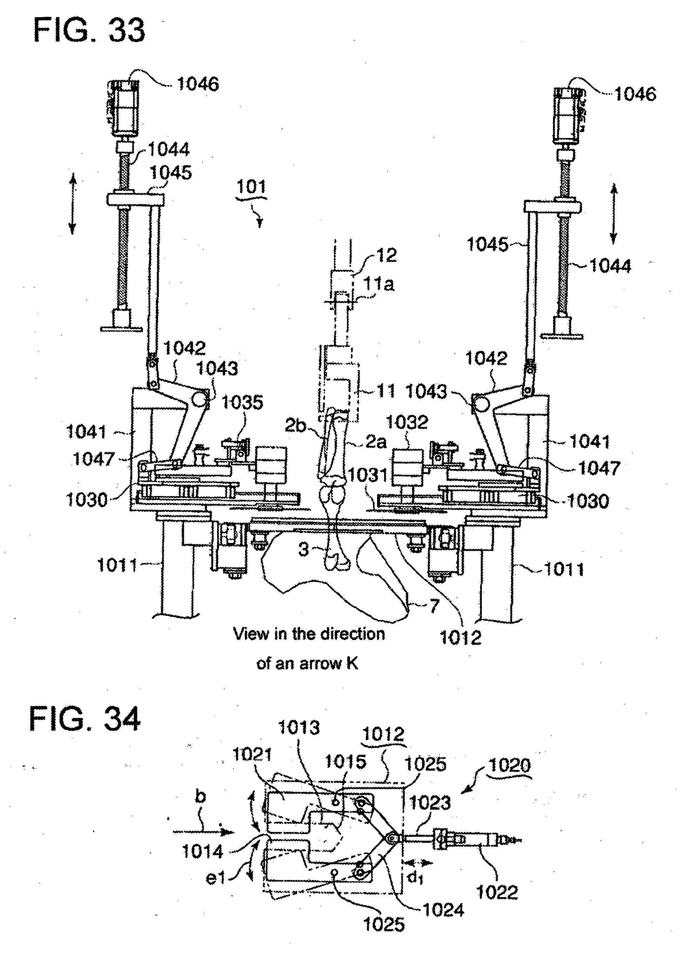

As shown in FIG.31, a meat separator 1012 and round blade cutters 1031 are disposed on a lower fixed frame 1011 such that they are slanted downward in the work transfer direction. As shown in FIGS.32 and 33, the thigh-meat scrape-off device 101 is disposed to straddle the work transfer line 12. As shown in FIG.33, the lower fixed frame 1011 is placed straddling the work transfer line 12 and the meat separator 1012 is disposed at the middle part of the lower frame 1011.

As shown in FIG.34, the meat separator 1012 has a concave portion 1013 opened toward upstream of the transfer direction b by an opening 1014, the width of the opening 1014 being such that the upper part of the knee joint of the work 1 can pass into the concave portion 1013, the concave portion 1013 being shaped to have a V-shaped bottom 1015 so that the femurbone 3 is centered at the bottom 1015 in the concave portion 1013 so that the femoral head 3a does not interfere with the edge of the concave portion 1013.

To the underside face of the meat separator 1012 is attached a gripping device 1020 for gripping the ankle part 8 of the work 1 inserted into the concave portion 1013 of the meat separator 1012 to prevent disengagement of the ankle part 8 form the meat separator. The gripping device 1020 is composed of a pair of swing plates 1021 attached to the underside face of the meat separator1012, an air cylinder 1022, piston rod of the air cylinder 1022, and a link bars 1024 for connecting the piston rod 1023 to the swing plate 1021.

Each of the swing plates 1021 swings about a supporting point 1025 in directions a double-headed arrow e1 when the cylinder rod 1023 moves in directions of a double-headed arrow d1 by actuating the air cylinder 1022, thus the opening 1014 of the concave portion 1013 can be opened and closed.

As shown in FIGS.32 and 33, just above the meat separator 1012 are disposed two pairs of round blade cutters 1031 (four blades in total) by which is made circumferential incision at a middle part between the underside face of the knee cap 6 and the femoral head 3a on the way of meat scraping and is performed cutting-off of meat under the femoral head 3a for last separation of meat. Each pair of the round blade cutters 1032 are individually supported on a base bracket 1030 such that the two pairs of the round blade cutters 1031 move independently of each other. Cutting operation of the round blade cutter 1031 is performed based on the result of measurement of work length detection device 41. The round blade cutter 31 is attached to an upper frame 1041 via L-shaped link bar 1042 and the base bracket 1030.

L-shaped link bar 1042(see FIG.33) is attached to an upper frame 1041 rotatably around a shaft 1043. An end of the L-shaped link 1042 is connected to a connecting member 1045 which can be moved up and down by means of a screw rod 1044 on top of which is connected a servomotor 1046 for rotating the screw rod 1044. A ball screw mechanism is constituted by the screw rod 1044 and the connecting member 1045.

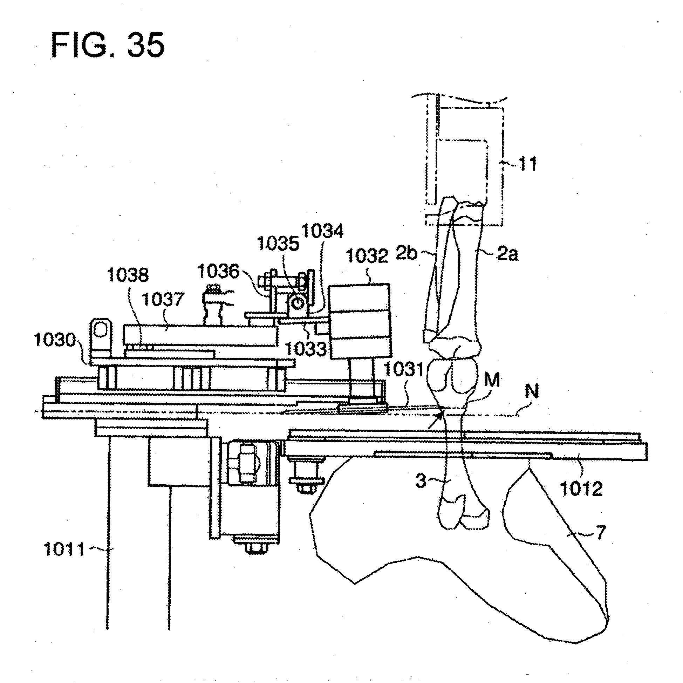

As shown in FIG.35, a cutter unit including the round cutter 1031 and a casing 1032 having a driving device for driving the cutter 1031 is connected to a bracket 1034 via a plate 1033. The bracket 1034 is connected rotatably to a connecting member 1036 via a horizontal shaft 1035. The connecting member 1036 is connected to a swing arm 1037. The swing arm 1037, which is connected to a base bracket 1030 rotatably about a shaft 1038. The L-shaped link bar 1042 is connected to the base bracket 1030 via a link 1047.

With the construction, by actuating the servomotor 1046, the screw rod 1044 rotates and the connecting member 1045 moves in the vertical direction. Consequently, the shaft moves rotatably and the base bracket 1030 moves closer or away from the work 1. In a similar manner, the round blade cutter 1031 can move closer to or away from the work 1 so as to cut at a connecting part of the meat to the bone.

As can be seen in FIG.32, to the base bracket 1030 is attached an air cylinder 1039 for each of the pair of round blade cutters 1031. A piston rod of each air cylinder 1039 is connected to each swing arm 1037, so each round blade cutter 1031 is supported elastically in horizontal direction via the air cylinder 1039 which serves as a shock absorber. When excessive force is exerted on the round blade cutter 1031 from the work 1, each round blade cutter 1031 moves in the direction of an arrow bl and the force exerted on the round blade cutter is alleviated.

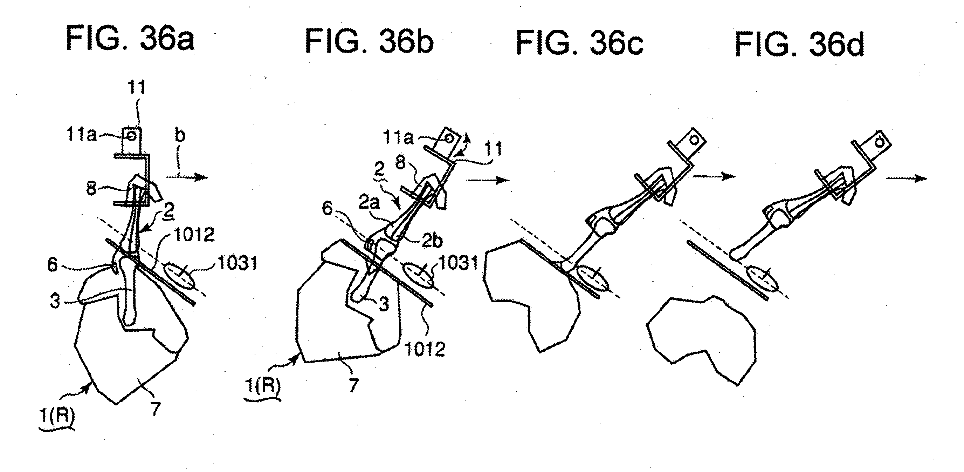

Next, deboning process of the femurbone will be explained with reference to FIGS.36a to 36d. In FIG.36, the work 1 transferred in the direction b intrudes into the concave portion 1013 of the meat separator 1012 disposed at a height position corresponding to the position just above the knee joint part 5 of the work 1 transferring along the transfer line 12. When the work 1 intrudes into the concave portion 1013, the air cylinder is actuated and the pair of swing plates 1021 rotates to close the opening 1014 of the concave portion 1013 of the meat separator, thus the work 1 is gripped. With this, the work 1 (R) will not fall through the concave portion 1013.

The gripped work 1 continues to be transferred horizontally in the direction b at a constant speed, so the work 1 is pulled obliquely upward and the femurbone is pressed to the V-shaped bottom 1015 of concave portion 1013 due to the weight of the work 1 and transfer of the clamp 11.

In this way, the upper part of the meat is pressed against the underside face of the meat separator 1012 as the work 1 is transferred. As the work 1 is pulled with the knee cap 6 being ahead in the transfer direction, inner thigh meat 7b is pressed against the underside face of the meat separator 1012. The inner thigh meat 7b moves in the direction shown by an arrow h1 starting from the incision line e (see FIG.16c). Therefore, movement of meat to intrude into the clearance between the femurbone 3 and the concave portion 1013 of the meat separator 1012 does not occur and choke up of meat in the clearance does not occur.

With the prior automatic deboning apparatus disclosed in the patent literature 1, the ankle part 8 of the work 1 is moved up vertically, so scraped meat becomes entangled with the bone and choke up of meat occurred, and scraping off of meat could not be finished by a single scraping action and it was necessary to repeat scraping action several times while dissolving the choke up of meat. According to the method and apparatus of the invention, scraping off of meat can be finished by a single scraping action.

In the case of manual processing, it has been necessary to make at least two incisions along the femurbone before scraping off the meat. According to the invention, scraping off of meat from the femurbone is possible by making a single incision along the femurbone 3(the third incision making process).

According to the embodiment, by cutting muscles, tendons, and ligaments adhering to the circumference of the bones by performing at least two circumferential incision at a middle part between the underside face of the knee cap 6 and the femoral head 3a on the way of meat scraping, meat can be removed with high yield rate. The meat part 7 is separated from the femurbone 3 and the separated meat is fallen down on a conveyor 102 disposed under the thigh-meat scrape-off device 101. The meat part 7 fallen on the conveyor 102 is transferred in the direction of an arrow c.

According to the embodiment, meat scraping process can be simplified dramatically and processing time can be decreased, so processing capacity can be increased. With the prior deboning apparatus, many combinations of meat separator, cutter, and work lifting means were necessary for meat separation processing, whereas with the embodiment, the same processing can be performed only with a combination of meat separator and cutter and work transfer device. Therefore, serious cost reduction and space saving can be achieved according to the invention.

In the embodiment, anteroposterior movement of the round blade cutter 1031 is achieved by rotating the servomotor 1046 in such a way that the rotation of the servomotor is converted via a ball screw device to vertical linear motion which is converted to the anteroposterior movement of the round blade cutter via link mechanism, so speed, timing, and operating position of the anteroposterior movement of the round blade cutter 1031 can be controlled accurately. Therefore, occurrence of break in blade edge of the round blade cutter 1013 is prevented resulting in increased durability thereof.

When the round blade cutter 1031 make incision into the meat, its blade edge contacts the bone for a certain time (0.5∼1.0 second). As the work 1 transfers at a constant speed, position of contact of the blade edge to the bone of the work 1 varies while the work 1 transfers if the cutter is supported solidly without flexibility, and force perpendicular to the cutter is exerted on the blade edge, which may nick the blade edge.

In the embodiment, as shown in FIG.35, the round blade cutter 1031 is supported rotatable about the horizontal shaft 1035, so the round blade cutter 1031 can be swung about the horizontal shaft 1035 pulled by the transferring the work 1 in a state the blade edge is touching the bone. In this manner, the blade edge is tilted upward so as to prevent a nicked blade edge.

In FIG. 35, a horizontal line N shows a position were the blade edge of the round blade cutter 1031 has just touched the bone and a line M shows a position where the round blade cutter 1031 has swung upward.

The top part of the femurbone 3 tapers toward the ankle part 8 so the blade edge stays on a bone surface even when the round blade cutter 1031 is tilted upward. Therefore, even after the blade is removed, biomedical tissue such as muscle, tendon, and ligament adhering to the bones are securely cut.

When the bone of the work 1 is departed from the blade edge of the round blade cutter 1031, the cutter returns to its initial position by its own gravity. In the embodiment, the plate 1033 contacts the underside face of the connecting member 1036 so that the round blade cutter 1031 is kept in horizontal attitude and can not swing downward.

Further, as the round blade cutter 1031 is supported pneumatically via the air cylinder 1039, it can be retreated from the work 1 when excessive force exerts on the work 1 and occurrence of break in the blade edge of the cutter can be prevented.

The bones hanging from the clamper 11 after meat is scraped off in the thigh-meat scrape-off station 100 are removed from the clamper 11 in the bone discharging station 110 and falls down on a conveyor 111 to be transferred in the direction of arrow c.

As has been mentioned heretofore, according to the embodiment, deboning process of a pig thigh part can be automated, operators can be released from hard work, yield of meat can be increased, speed up of deboning line is made possible, and processing efficiency can be improved. Furthermore, by removing pig thigh meat without impairment, its commodity value is not degraded.

For example, by setting work transfer speed at7 seconds per one processing station, deboning of 500 leg parts per an hour is made possible.

### [Industrial applicability]

According to the invention, in a deboning device for deboning the meat with bone while being transferred, loading of the meat with bone onto the carrier line can be automated and thus reduction in labor power in de-boning operation is achieved

## Claims

1. A method of loading meat with bone (1) on a carrier device (12), the meat with bone having a bulged portion widening toward a main body (7) thereof and a tip bone (8) exposed at a tip thereof, the carrier device being used to carry the meat with bone during a deboning process for deboning the meat with bone, wherein the method comprises the steps of:
moving the meat toward a downstream side of a conveyor (21, 22) in a state where a tip bone of the meat is aligned along a traveling direction of the conveyor, the conveyor being provided with a V-shaped guide (27) on the downstream side thereof, the V-shaped guide being constituted of a pair of guide plates (27a) arranged above the conveyor toward a center thereof so as to form a gap (zs1) therebetween, which is narrower than the bulged portion and wider than the tip bone;
positioning the tip bone of the meat by sliding the meat along the guide surface in such a manner that the tip bone (8) sticks out from though the gap (s1) and the bulged portion is pressed against the guide plate; and
gripping the tip bone which sticks out from the gap of the meat with a gripping device (311) of a a multi-axis articulated arm (31), the gripping device being operated along a predetermined motion orbit; **characterized in that** it further comprises the step of transferring the gripped meat to a loading part (11) of the carrier device (12) by operating the multi-axis articulated arm gripping the tip bone and by lifting the meat with bone.

2. The method of loading the meat with bone on the carrier device according to claim 1,
wherein the motion orbit and operation timing of the gripping device are program-controlled in synchronization with a motion of the deboning process.

3. The method of loading the meat with bone on the carrier device according to claim 1 or 2,
wherein the step of gripping the meat with bone includes substeps of;
provisionally holding the meat with the gripping device at the tip bone nearer to a main body of the meat than a clamp point to be gripped with the gripping device; and
then sliding the meat down by weight of the meat when the multi-axis articulated arm lifts the meat so that the tip bone of the meat is gripped with the gripping device at the clamp point.

4. The method of loading the meat with bone on the carrier device according to any one of claims 1 to 3,
wherein a top surface of the conveyor is used as a table for pre-treating the meat with bone.

5. The method of loading the meat with bone on the carrier device according to claim 1 or 2,
wherein the transferring step includes substeps of:
hanging the meat to a clamp table having such clearance that a thinnest part of the meat fits in, the clamp table being located on a loading part of a carrier device; and
transferring the meat from the clamp table to a clamper (11) in the carrier device by a pusher provided on the clamp table, the pusher being controlled so that a movement of the pusher is in synchronization with that of the clamper.

6. A device of loading meat with bone (1) on a carrier device (12), the meat with bone a bulged portion widening toward a main body (7) thereof and a tip bone (8) exposed at a tip thereof, the carrier device being used to carry the meat with bone during a deboning process for deboning the meat with bone by means of stations (40, 50, 60, 70, 80, 90, 100, 110) arranged along the carrier device, wherein the device comprises:
at least one conveyor (21, 22) arranged near a loading unit of a carrier device;
a V-shaped guide (27) which is provided above the conveyor and constituted of a pair of guide plates (27a) arranged above the conveyor toward a center thereof so as to form a gap (s1) therebetween, which is narrower than the bulged portion and wider than the tip projection, the V-shaped guide temporarily stopping a movement of the meat on the conveyor to position the tip projection of the meat in such a manner that the tip bone of the meat sticks out through the gap between the pair of guide plates; and
a multi-axis articulated arm (31) which has a gripping device (311) gripping the tip bone of the meat positioned by the V-shaped guide plate, **characterized in that** the multi-axis articulated arm being operated along a predetermined motion orbit so that the gripped meat is lifted and transferred to a loading part of the carrier device.

7. The device of loading the meat with bone according to claim 6,
wherein the gripping device includes a pair of gripping pieces (312) being capable of moving closer or away from each other and having depressions (313) formed on inner surfaces of the gripping pieces, and
wherein a thinnest part of the meat slides into the depressions of the gripping pieces when the gripping device grips and lifts the meat at the tip bone by the gripping pieces.

8. The device of loading the meat with bone according to claim 6, wherein the device comprises a controller (120) configured to control operation of the conveyor and operation of the gripping device of the multi-axis articulated arm so that the the tip bone sticking out through the gap of the V-shaped guide is lifted and transferred to the loading part of the carrier device.

9. The device of loading the meat with bone according to claim 8, wherein the controller comprises a calculation means which calculates an optimal transfer speed of the conveyor based on a passing timing of the meat with bone on the conveyor, the passing timing being detected by a sensor (25, 26) provided in a predetermined position, so that the transfer speed of the conveyor matches a timing of gripping the tip bone by the multi-axis articulated arm.

10. The device of loading the meat with bone according to claim 8, wherein the gripping device is constituted of a pair of gripping pieces (312) being capable of moving closer or away from each other and having depressions (313) formed on inner surfaces of the gripping pieces, and
wherein the controller is configured to narrow the distance between the gripped pieces in synchronism with sliding of the meat by its own gravity into the depressions of the gripping pieces when the gripping device od the multi-axis articulated arm grips and lifts the meat.

## Patentansprüche

1. Verfahren zum Laden von Fleisch mit Knochen (1) auf eine Transportvorrichtung (12), wobei das Fleisch mit Knochen einen gewölbten Abschnitt, der sich in Richtung eines Hauptkörpers (7) verbreitert, und einen Spitzknochen (8), der an einer Spitze freigelegt ist, aufweist, wobei die Transportvorrichtung verwendet wird, um das Fleisch mit Knochen während eines Ausbeinvorgangs zum Ausbeinen des Fleisches mit Knochen zu transportieren, wobei das Verfahren folgende Schritte umfasst:
- Bewegen des Fleisches zu einer stromabwärtigen Seite einer Fördereinrichtung (21, 22) in einem Zustand, in dem ein Spitzknochen des Fleisches entlang einer Transportrichtung der Fördereinrichtung ausgerichtet ist, wobei die Fördereinrichtung auf ihrer stromabwärtigen Seite mit einer V-förmigen Führung (27) versehen ist, wobei die V-förmige Führung aus einem Paar von Führungsplatten (27a) gebildet ist, die oberhalb der Fördereinrichtung zu einer Mitte hin angeordnet sind, um einen Spalt (s1) zwischen sich zu bilden, der enger als der gewölbte Abschnitt und breiter als der Spitzknochen ist;
- Positionieren des Spitzknochens des Fleisches durch Gleitenlassen des Fleisches entlang der Führungsfläche, derart, dass der Spitzknochen (8) durch den Spalt (s1) hervorsteht und der gewölbte Abschnitt gegen die Führungsplatte gepresst wird; und
- Ergreifen des Spitzknochens, der aus dem Spalt des Fleisches hervorsteht, mit einer Greifvorrichtung (311) eines mehrachsigen Gelenkarms (31), wobei die Greifvorrichtung entlang einer vorbestimmten Bewegungsbahn betrieben wird;
**dadurch gekennzeichnet, dass** es des Weiteren den Schritt des Übergebens des ergriffenen Fleisches an einen Ladeteil (11) der Transportvorrichtung (12) aufweist, indem der mehrachsige Gelenkarm, der den Spitzknochen ergreift, angetrieben und das Fleisch mit Knochen angehoben wird.

2. Verfahren zum Laden des Fleisches mit Knochen auf die Transportvorrichtung nach Anspruch 1, wobei die Bewegungsbahn und die Zeitsteuerung für den Betrieb der Greifvorrichtung synchron mit einer Bewegung des Ausbeinverfahrens programmgesteuert sind.

3. Verfahren zum Laden des Fleisches mit Knochen auf die Transportvorrichtung nach Anspruch 1 oder 2, wobei der Schritt des Ergreifens des Fleisches mit Knochen folgende Unterschritte umfasst:
- vorläufiges Halten des Fleisches mit der Greifvorrichtung an dem Spitzknochen näher an einem Hauptkörper des Fleisches als eine Klammerstelle, die mit der Greifvorrichtung ergriffen werden soll; und dann
- Gleitenlassen des Fleisches nach unten durch das Gewicht des Fleisches, wenn der mehrachsige Gelenkarm das Fleisch anhebt, so dass der Spitzknochen des Fleisches mit der Greifvorrichtung an der Klammerstelle ergriffen wird.

4. Verfahren zum Laden des Fleisches mit Knochen auf die Transportvorrichtung nach einem der Ansprüche 1 bis 3, wobei eine obere Fläche der Fördereinrichtung als Tisch zur Vorbehandlung des Fleisches mit Knochen verwendet wird.

5. Verfahren zum Laden des Fleisches mit Knochen auf die Transportvorrichtung nach Anspruch 1 oder 2, wobei der Schritt der Übergabe die folgenden Unterschritte umfasst:
- Hängen des Fleisches an einen Klemmtisch mit einem solchen Abstand, dass ein dünnster Teil des Fleisches hineinpasst, wobei sich der Klemmtisch auf einem Ladeteil einer Transportvorrichtung befindet; und
- Übergeben des Fleisches von dem Klemmtisch an eine Klemmeinrichtung (11) in der Transportvorrichtung durch einen auf dem Klemmtisch vorgesehenen Schieber, wobei der Schieber derart gesteuert wird, dass eine Bewegung des Schiebers mit derjenigen der Klemmeinrichtung synchron ist.

6. Vorrichtung zum Laden von Fleisch mit Knochen (1) auf eine Transportvorrichtung (12), wobei das Fleisch mit Knochen einen gewölbten Abschnitt, der sich in Richtung eines Hauptkörpers (7) verbreitert, und einen Spitzknochen (8) aufweist, der an einer Spitze freigelegt ist, wobei die Transportvorrichtung dazu verwendet wird, das Fleisch mit Knochen während eines Ausbeinvorgangs zum Ausbeinen des Fleisches mit Knochen durch entlang der Transportvorrichtung angeordnete Stationen (40, 50, 60, 70, 80, 90, 100, 110) zu transportieren, wobei die Vorrichtung umfasst:
- mindestens eine Fördereinrichtung (21, 22), die nahe einer Ladeeinheit einer Transportvorrichtung angeordnet ist;
- eine V-förmige Führung (27), die über der Fördereinrichtung vorgesehen und aus einem Paar von Führungsplatten (27a) gebildet ist, die oberhalb der Fördereinrichtung zu einer Mitte hin angeordnet sind, um einen Spalt (s1) zwischen sich zu bilden, der enger als der gewölbte Abschnitt und breiter als der Spitzenvorsprung ist, wobei die V-förmige Führung vorübergehend eine Bewegung des Fleisches auf der Fördereinrichtung anhält, um den Spitzenvorsprung des Fleisches derart zu positionieren, dass der Spitzknochen des Fleisches durch den Spalt zwischen dem Paar von Führungsplatten hervorsteht; und
- einen mehrachsigen Gelenkarm (31), der eine Greifvorrichtung (311) aufweist, die den Spitzknochen des durch die V-förmige Führungsplatte positionierten Fleisches ergreift,
**dadurch gekennzeichnet, dass** der mehrachsige Gelenkarm entlang einer vorbestimmten Bewegungsbahn betrieben wird, so dass das ergriffene Fleisch angehoben und an einen Ladeteil der Transportvorrichtung übergeben wird.

7. Vorrichtung zum Laden des Fleisches mit Knochen nach Anspruch 6, wobei die Greifvorrichtung ein Paar von Greifstücken (312) aufweist, die in der Lage sind, sich aufeinander zu oder voneinander weg zu bewegen, und die Vertiefungen (313) aufweisen, die an Innenflächen der Greifstücke gebildet sind, und wobei ein dünnster Teil des Fleisches in die Vertiefungen der Greifstücke gleitet, wenn die Greifvorrichtung das Fleisch an dem Spitzknochen durch die Greifstücke ergreift und anhebt.

8. Vorrichtung zum Laden des Fleisches mit Knochen nach Anspruch 6, wobei die Vorrichtung ein Steuergerät (120) aufweist, das dafür eingerichtet ist, den Betrieb der Fördereinrichtung und den Betrieb der Greifvorrichtung des mehrachsigen Gelenkarms derart zu steuern, dass der durch den Spalt der V-förmigen Führung hervorstehende Spitzknochen angehoben und an den Ladeteil der Transportvorrichtung übergeben wird.

9. Vorrichtung zum Laden des Fleisches mit Knochen nach Anspruch 8, wobei das Steuergerät eine Berechnungseinrichtung umfasst, die auf Grundlage einer Durchlaufzeit des Fleisches mit Knochen auf der Fördereinrichtung eine optimale Übergabegeschwindigkeit der Fördereinrichtung berechnet, wobei die Durchlaufzeit von einem an einer vorgegebenen Position vorgesehenen Sensor (25, 26) erkannt wird, so dass die Übergabegeschwindigkeit der Fördereinrichtung zu einer Zeitsteuerung des Ergreifens des Spitzknochens durch den mehrachsigen Gelenkarm passt.

10. Vorrichtung zum Laden des Fleisches mit Knochen nach Anspruch 8, wobei die Greifvorrichtung aus einem Paar von Greifstücken (312) gebildet ist, die in der Lage sind, sich aufeinander zu oder voneinander weg zu bewegen, und die Vertiefungen (313) aufweisen, die an Innenflächen der Greifstücke gebildet sind, und wobei das Steuergerät dafür eingerichtet ist, den Abstand zwischen den Greifstücken synchron mit dem Gleiten des Fleisches durch seine eigene Schwerkraft in die Vertiefungen der Greifstücke zu verkleinern, wenn die Greifvorrichtung des mehrachsigen Gelenkarms das Fleisch ergreift und anhebt.

## Revendications

1. Procédé pour charger de la viande avec os (1) sur un dispositif de support (12), la viande avec os ayant une partie en saillie s'élargissant vers son corps principal (7) et un os de pointe (8) exposé au niveau de sa pointe, le dispositif de support étant utilisé pour porter la viande avec os pendant un procédé de désossage pour désosser la viande avec os, dans lequel le procédé comprend les étapes consistant à :
déplacer la viande vers un côté en aval d'un transporteur (21, 22) dans un état dans lequel un os de pointe de la viande est aligné le long d'une direction de déplacement du transporteur, le transporteur étant prévu avec un guide en forme de V (27) sur son côté en aval, le guide en forme de V étant constitué par une paire de plaques de guidage (27a) agencées au-dessus du transporteur vers son centre afin de former un espace (s1) entre elles, qui est plus étroit que la partie en saillie et plus large que l'os de pointe ;
positionner l'os de pointe de la viande en faisant coulisser la viande le long de la surface de guidage de sorte que l'os de pointe (8) dépasse de l'espace (s1) et que la partie en saillie est comprimée contre la plaque de guidage ; et
saisir l'os de pointe qui dépasse de l'espace de la viande avec un dispositif de préhension (311) d'un bras articulé multiaxial (31), le dispositif de préhension étant actionné le long d'une orbite de mouvement prédéterminée,
**caractérisé en ce qu'**il comprend en outre l'étape consistant à transférer la viande saisie vers une partie de chargement (11) du dispositif de support (12) en actionnant le bras articulé multiaxial saisissant l'os de pointe et en levant la viande avec os.

2. Procédé pour charger de la viande avec os sur le dispositif de support selon la revendication 1,
dans lequel l'orbite de mouvement et le temps de fonctionnement du dispositif de préhension sont programmés en synchronisation avec un mouvement du procédé de désossage.

3. Procédé pour charger de la viande avec os sur le dispositif de support selon la revendication 1 ou 2,
dans lequel l'étape consistant à saisir la viande avec os comprend les sous-étapes consistant à :
maintenir provisoirement la viande avec le dispositif de préhension au niveau de l'os de pointe plus près d'un corps principal de la viande qu'un point de serrage à saisir avec le dispositif de préhension ; et
faire descendre ensuite par coulissement la viande sous l'effet de son poids lorsque le bras articulé multiaxial lève la viande de sorte que l'os de pointe de la viande est saisi avec le dispositif de préhension au niveau du point de serrage.

4. Procédé pour charger de la viande avec os sur le dispositif de support selon l'une quelconque des revendications 1 à 3,
dans lequel une surface supérieure du transporteur est utilisée en tant que table pour traiter la viande avec os.

5. Procédé pour charger de la viande avec os sur le dispositif de support selon la revendication 1 ou 2,
dans lequel l'étape de transfert comprend les sous-étapes consistant à :
suspendre la viande à une table de serrage ayant un jeu tel que la partie la plus fine de la viande s'y fixe, la table de serrage étant positionnée sur une partie de chargement du dispositif de support, et
transférer la viande de la table de serrage à un dispositif de serrage (11) dans le dispositif de support par un poussoir prévu sur la table de serrage, le poussoir étant commandé de sorte qu'un mouvement du poussoir est en synchronisation avec celui du dispositif de serrage.

6. Dispositif pour charger de la viande avec os (1) sur un dispositif de support (12), la viande avec os ayant une partie en saillie s'élargissant vers son corps principal (7) et un os de pointe (8) exposé au niveau de sa pointe, le dispositif de support étant utilisé pour transporter la viande avec os pendant un processus de désossage pour désosser la viande avec os au moyen de stations (40, 50, 60, 70, 80, 90, 100, 110) agencées le long du dispositif de support, dans lequel le dispositif comprend :
au moins un transporteur (21, 22) agencé à proximité d'une unité de chargement d'un dispositif de support ;
un guide en forme de V (27) qui est prévu au-dessus du transporteur et constitué par une paire de plaques de guidage (27a) agencées au-dessus du transporteur vers son centre afin de former un espace (s1) entre elles, qui est plus étroit que la partie en saillie et plus large que la saillie de pointe, le guide en forme de V arrêtant temporairement un mouvement de la viande sur le transporteur pour positionner la saillie de pointe de la viande de sorte que l'os de pointe de la viande dépasse à travers l'espace entre la paire de plaques de guidage ; et
un bras articulé multiaxial (31) qui a un dispositif de préhension (311) saisissant l'os de pointe de la viande positionné par la plaque de guidage en forme de V,
**caractérisé en ce que** la bras articulé multiaxial est actionné le long d'une orbite de mouvement prédéterminée de sorte que la viande saisie est soulevée et transférée vers une partie de chargement du dispositif de support.

7. Dispositif pour charger de la viande avec os selon la revendication 6,
dans lequel le dispositif de préhension comprend une paire de pièces de préhension (312) qui peuvent se rapprocher ou s'éloigner l'une de l'autre et ayant des dépressions (313) formées sur les surfaces internes des pièces de préhension, et
dans lequel la partie la plus fine de la viande coulisse dans les dépressions des pièces de préhension lorsque le dispositif de préhension saisit et soulève la viande au niveau de l'os de pointe par les pièces de préhension.

8. Dispositif pour charger de la viande avec os selon la revendication 6, dans lequel le dispositif comprend un organe de commande (120) configuré pour commander le fonctionnement du transporteur et le fonctionnement du dispositif de préhension du bras articulé multiaxial de sorte que l'os de pointe dépassant à travers l'espace du guide en forme de V est soulevé et transféré vers la partie de chargement du dispositif de support.

9. Dispositif pour charger de la viande avec os selon la revendication 8, dans lequel l'organe de commande comprend un moyen de calcul qui calcule une vitesse de transfert optimale du transporteur en fonction d'un temps de passage de la viande avec os sur le transporteur, le temps de passage étant détecté par un capteur (25, 26) prévu dans une position prédéterminée, de sorte que la vitesse de transfert du transporteur correspond à un temps de préhension de l'os de pointe par le bras articulé multiaxial.

10. Dispositif pour charger de la viande avec os selon la revendication 8, dans lequel le dispositif de préhension est constitué par une paire de pièces de préhension (312) qui peuvent se rapprocher ou s'éloigner l'une de l'autre et ayant des dépressions (313) formées sur des surfaces internes des pièces de préhension, et
dans lequel l'organe de commande est configuré pour rétrécir la distance entre les pièces saisies en synchronisme avec le coulissement de la viande par son propre poids dans les dépressions des pièces de préhension lorsque le dispositif de préhension ou le bras articulé multiaxial saisit et soulève la viande.
